# EUROPÄISCHE PATENTSCHRIFT

(11) **EP 0 828 215 B1**
(45) Veröffentlichungstag und Bekanntmachung des Hinweises auf die Patenterteilung: **15.05.2002**
(21) Anmeldenummer: 97115369.7
(22) Anmeldetag: 04.09.1997
(51) Int. Cl.: G06F 11/00

(54) **Verfahren zur Verifikation eines Programms, welches in einer Sprache für speicher-programmierbare Steuerungen vorliegt, durch einen Rechner**
Method for computer verification of a program, which is present in a language for a programmable logic control
Procédé de vérification par un ordinateur d'un programme écrit dans un langage pour automate programmable

(30) Priorität: 05.09.1996 DE 19636072
(43) Veröffentlichungstag der Anmeldung: 11.03.1998
(73) Patentinhaber: SIEMENS AKTIENGESELLSCHAFT, 80333 München (DE)
(72) Erfinder: Warkentin, Peter, Dr.rer.nat, 81737 München (DE); Payer, Michael, Dr.rer.nat., 80798 München (DE); Hölzlein, Markus, 81827 München (DE); Filkorn, Thomas, Dr.rer.nat., 82515 Wolfratshausen (DE)

(56) Entgegenhaltungen:
- EP-A- 0 685 792
- US-A- 5 481 717
- FISCHER J ET AL: "COMPOSITIONAL MODEL CHECKING OF ADA TASKING PROGRAMS" PROCEEDINGS OF THE ANNUAL CONFERENCE ON COMPUTER ASSURANCE (COMPASS, GAITHERSBURG, JUNE 27 - JULY 1, 1994, Nr. CONF. 9, 27.Juni 1994, INSTITUTE OF ELECTRICAL AND ELECTRONICS ENGINEERS, Seiten 135-147, XP000489155

## Beschreibung

Verfahren zur Verifikation eines Programms, welches in einer Sprache für speicherprogrammierbare Steuerungen vorliegt, durch einen Rechner

Die Notwendigkeit der formalen Verifikation von Programmen wächst mit der zunehmenden Verbreitung von Software und somit der Mächtigkeit und der Komplexität entwickelter Programme.

Unter einer formalen Verifikation ist im Rahmen dieses Dokumentes der Nachweis der Korrektheit eines Programms bezüglich einer formalen Spezifikation zu verstehen. Korrekt bedeutet in diesem Zusammenhang, daß alle möglichen zeitlichen Verhaltensabläufe des zu verifizierenden Programms mindestens eine vorgebbare spezifizierte Eigenschaft erfüllen.

Beispielsweise aus dem Dokument [1] ist ein mathematisches Kalkül zur Verifikation eines PASCAL-Programms bekannt. Dieses Verfahren ist jedoch in der Nachweisführung sehr aufwendig und langwierig, an den wesentlichen Stellen ohne wirkungsvolle Werkzeugunterstützung unter Verwendung eines Rechners und stellt hohe Anforderungen an die mathematische Qualifikation eines Benutzer des Verfahrens, insbesondere in dem mathematischen Gebiet der Logik.

Aus dem Dokument [2] ist die Umsetzung von logischen Formeln zur Beschreibung eines endlichen Automaten in eine sog. Binary-Decision-Diagram-Darstellung (BDD-Darstellung) bekannt.

Ferner ist aus dem Dokument[3] ein Verfahren zur sog. Modellüberprüfung (Model-Checking) auf einen endlichen Automaten, der mit Hilfe von BDDs repräsentiert wird, bekannt.

Beispielsweise aus den Dokumenten [4], [5] und [6] sind Verfahren zur formalen Verifikation eines VHDL-Programms bezüglich vorgebbarer zu verifizierender Eigenschaften des Programms bekannt.

Die Hardwarebeschreibungssprache VHDL dient zur Simulation von elektronischer Hardware. Neben der Syntax ist auch die Semantik von VHDL eindeutig festgelegt.

Ein Programm zur speicherprogrammierbaren Steuerung (SPS-Programm) kann dagegen in ein auf einem Rechner ablauffähiges Maschinenprogramm übersetzt werden.

Ferner enthalten SPS-Programme Zeitbefehle, beispielsweise sog. Timer und unterschiedliche Korrelationen zwischen Timern, beispielsweise der Ablauf von verschiedenen Timern zu unterschiedlichen Zeiten.

Mit den bisher bekannten Verfahren ist es nicht möglich, eine formale Verifikation für SPS-Programme durchzuführen.

Somit liegt der Erfindung das Problem zugrunde, ein Verfahren zur formalen Verifikation von SPS-Programmen anzugeben.

Das Problem wird durch das Verfahren gem. Patentanspruch 1 gelöst.

Das Programm liegt in einer Sprache für speicherprogrammierbare Steuerungen, die im weiteren als SPS-Programme bezeichnet werden, vor. Für das SPS-Programm wird mindestens eine vorgebbare Eigenschaft des Programms in einer formalen Spezifikationssprache beschrieben, die mit dem Verfahren verifiziert wird. Das SPS-Programm wird auf einen endlichen Automaten abgebildet und der endliche Automat wird unter Verwendung von BDDs beschrieben. Die zu verifizierende Eigenschaft wird anhand des als BDD beschriebenen endlichen Automaten unter Verwendung der sog. symbolischen Modellüberprüfung (Symbolic Modell Checking) überprüft.

Das Verfahren weist einige erhebliche Vorteile auf. Durch das Verfahren wird es erstmals möglich, auch SPS-Programme mit den spezifischen Eigenschaften von SPS-Programmen, der erhöhten Komplexität sowie den in den SPS-Programm enthaltenen Zeitbefehlen und Timern und der Struktur von unendlichen Befehlsschleifen, zu verifizieren.

Ein weiterer Vorteil des Verfahrens ist in der Berücksichtigung von exakten Spezifikationen der Eigenschaften einer Steuerung in der formalen Spezifikationssprache zu sehen. Mit diesem Verfahren wird es sehr einfach und mit absoluter Verläßlichkeit möglich, die Abnahme der Steuerung, die mit dem SPS-Programm beschrieben wird, mit einer vollautomatischen und vollständigen Programmüberprüfung durch den Auftraggeber zu realisieren.

Ein weiterer Vorteil des Verfahrens ist in der Berücksichtigung des Umgebungsverhaltens zu sehen. Das gesteuerte System meldet in der Regel nicht alle möglichen durch die verwendeten Datentypen erlaubten Datensequenzen an die Steuerung zurück, sondern nur eine Auswahl. So kann z.B. ein Temperaturfühler für absolute Temperaturen keine negativen Werte melden. Ein Winkelmesser, der Winkelgrade meldet, wird nur Werte zwischen 0 und 360 liefern. Die Rückmeldungen des gesteuerten Systems können aber auch temporal eingeschränkt sein. So mag die physikalische Realisierung der gesteuerten Anlage z.B. garantieren, daß vor einem bestimmten Ereignis B immer ein Ereignis A aufgetreten sein muss. Ein SPS-Programm berücksichtigt i.d.R. derartiges (Umgebungs-)Verhalten.

Ein Vorteil des hier beschriebenen Verfahrens ist u. a. darin zu sehen, daß die formale Spezifikationssprache die Formulierung dieser Umgebungseigenschaften und damit deren Berücksichtigung ermöglicht. Weiterhin können derartige Annahmen dazu dienen, das Verhalten von nicht modellierten Steuerungskomponenten wie z.B. komplexen Funktionsbausteinen, Timern, Zählern, ..., in einer der Verifikationsaufgabe angemessenen Detaillierung abstrahiert zu beschreiben, was im weiteren näher erläutert wird.

Ferner wird durch dieses Verfahren eine Fehlererkennung in frühen Entwurfsphasen bei komplexen SPS-Programmen möglich, was zu einer erheblichen Produktivitätssteigerung und Kostensenkung führt.

Auch ist ein erheblicher Vorteil des Verfahrens in der Sicherheit zu sehen, daß im Falle der Korrektheit des SPS-Programms bzgl. einer vorgegebenen Eigenschaft ein mathematisch exakter Nachweis dafür gefunden wird. Dies führt zu einer sehr vorteilhaften Einsatzmöglichkeit des Verfahrens bei der Zertifizierung von Steuerungssoftware, also bei SPS-Programmen.

Auch wird durch das Verfahren eine regressive Überprüfung nach Änderungen des Programms leicht möglich. Dies führt zu einer sehr vorteilhaften Einsatzmöglichkeit des Verfahrens im Software-Lebenszyklus von der Projektierphase bis zur Wartungsphase der Sofware im Feldeinsatz.

Vorteilhafte Weiterbildungen der Erfindung ergeben sich aus den abhängigen Ansprüchen.

Es ist vorteilhaft, daß für den Fall, daß das Programm die zu verifizierende Eigenschaft nicht aufweist, eine Widerlegungssequenz ermittelt wird und einem Benutzer bei Bedarf angezeigt wird. Dadurch wird es für den Benutzer leicht erkennbar, was die Ursache für die fehlende Eigenschaft des SPS-Programmes ist.

In den Figuren sind Ausführungsbeispiele der Erfindung dargestellt, die im weiteren näher erläutert werden.

Es zeigen
- Fig. 1: eine Skizze, in der in Form eines Blockdiagramms das Prinzip der formalen Verifikation dargestellt ist;
- Fig. 2: eine Skizze, in der eine logische Darstellung eines SPS-Programm zur Steuerung der Bearbeitung eines Werkstückes dargestellt ist;
- Fig. 3: eine Zustandsgraphenbeschreibung eines Teils des SPS-Programms zur Bearbeitung des Werkstücks aus Fig. 2;
- Fig. 4: eine Widerlegungssequenz, in der eine Möglichkeit der Ausgabe dargestellt ist, wenn das SPS-Programm die zu überprüfende Eigenschaft nicht aufweist;
- Fig. 5: die Widerlegungssequenz in Form einer Skizze für das SPS-Programm zur Bearbeitung des Werkstücks aus Fig. 2;
- Fig. 6: ein Zustandsgraph eines einfachen zweiten Ausführungsbeispiels eines SPS-Programms;
- Fig. 7: ein Ablaufdiagramm, in dem die einzelnen Verfahrensschritte des Verfahrens dargestellt sind.

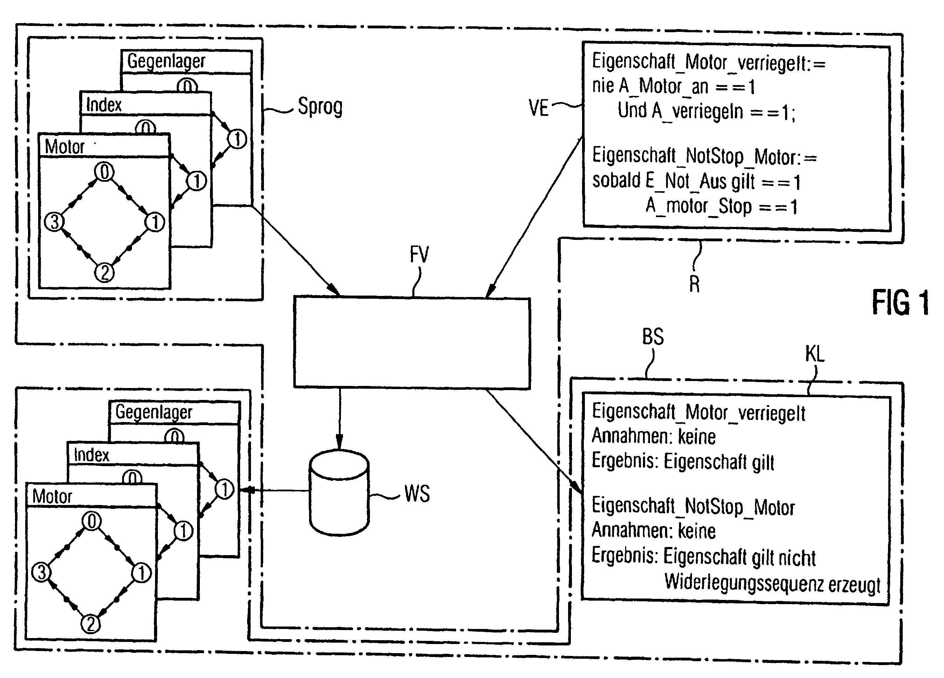

In Fig. 1 ist in Form eines Blockdiagramms eine skizzenhafte Strukturbeschreibung des Verfahrens zur Verifikation eines SPS-Programms SProg dargestellt. Das Verfahren wird mit Hilfe eines Rechners R durchgeführt.

In der Figur 1 ist eine formale Verifikation FV symbolisch als ein eigener Block dargestellt.

Der formalen Verifikation FV wird das SPS-Programm SProg als eine Form der Systembeschreibung zugeführt.

Ferner wird der formalen Verifikation FV mindestens eine zu verifizierende Eigenschaft VE zugeführt. Die zu verifizierende Eigenschaft ist in einer formalen Spezifikationssprache beschrieben.

Weiterhin können der formalen Verifikation FV eine oder mehrere Annahmen A über das Verhalten der Umgebung oder der nicht modellierter Komponenten zugeführt werden. Diese Annahmen können ebenfalls in der formalen Spezifikationssprache beschrieben werden.

Ein SPS-Programm SProg kann in unterschiedlichster Art und Weise dargestellt werden, wie im weiteren beschrieben wird, z. B. in Form eines Zustandsgraphenprogramms oder auch in Form sog. Anweisungslisten AWL. Auch die zu verifizierende Eigenschaft VE kann in unterschiedlicher Form beschrieben sein, beispielsweise in einer sog. temporallogischen Beschreibungsform. Nachdem auf das SPS-Programm SProg die formale Verifikation FV ausgeführt wird, ergibt sich entweder, daß die zu verifizierende Eigenschaft VE für das SPS-Programm SProg gilt oder auch nicht. Es ist in diesem Verfahren ebenso vorgesehen, eine beliebige Anzahl von Eigenschaften VE in einem Verfahren zu überprüfen.

Ist die mindestens eine zu verifizierende Eigenschaft VE gegeben, so wird durch die formale Verifikation FV ein Korrektheitsnachweis geführt, der beispielsweise in einer Korrektheitsliste KL auf einem Bildschirm BS einem Benutzer des Verfahrens dargestellt werden kann. Gilt jedoch die Eigenschaft nicht, so kann eine Widerlegungssequenz WS in einer Weiterbildung des Verfahrens gebildet werden und beispielsweise ebenso dem Benutzer in Form in einer visualisierten Widerlegungssequenz WS dargestellt werden.

Bei dem Verfahren zur formalen Verifikation wird das SPS-Programm SProg auf mindestens einen endlichen Automaten abgebildet, mit dem das Systemverhalten modelliert wird. Die Abbildung erfolgt, wie im weiteren beschrieben wird, automatisch durch den Rechner R.

Aus Gründen der Vereinfachung wird im folgenden nur die Konstellation beschrieben, daß sowohl das Verfahren zur formalen Verifikation des SPS-Programms SProg als auch die Programmausführung des SPS-Programms SProg auf demselben Rechner R durchgeführt werden. Selbstverständlich können Überprüfung und Ausführung auch auf verschiedenen Rechnern durchgeführt werden.

### Erstes Ausführungsbeispiel:

In einem ersten Ausführungsbeispiel wird das Prinzip des Verfahrens anhand der Verifikation eines SPS-Programms SProg, das in Form einer Zustandsgraphenbeschreibung vorliegt, beschrieben. Unter einer Zustandsgraphenbeschreibungssprache ist beispielsweise die sog. Zustandsgraphenprogrammiersprache des Software-Werkzeugs HiGraph zu verstehen.

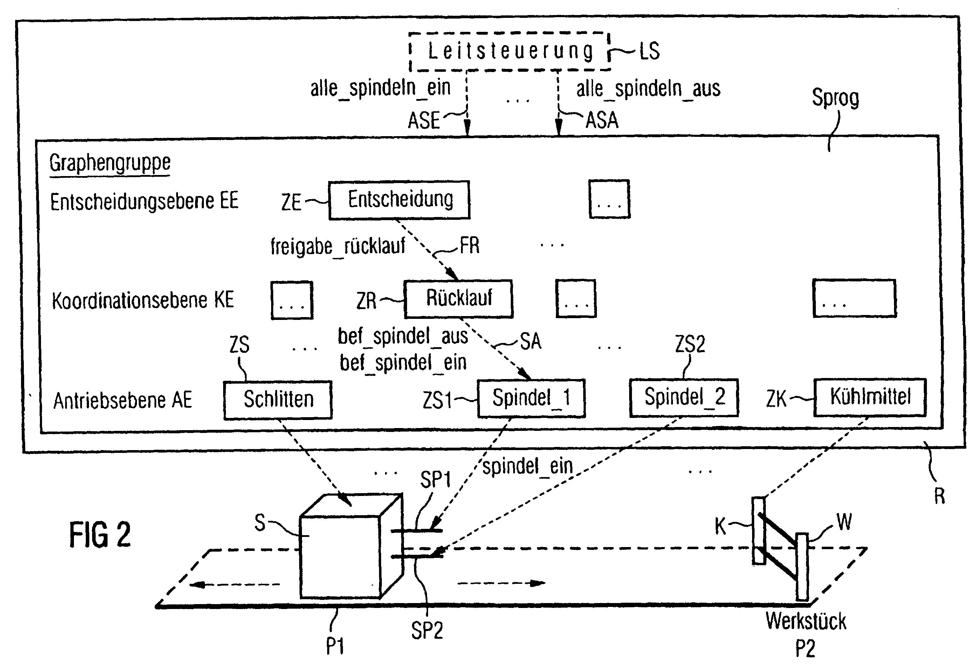

In dem ersten Ausführungsbeispiel wird eine Werkzeugmaschinensteuerung erläutert. Diese ist in Fig. 2 dargestellt. Von dem Rechner R wird das SPS-Programm SProg ausgeführt. Mit dem SPS-Programm SProg wird ein Schlitten S, auf dem sich eine erste Spindel SP1 und eine zweite Spindel SP2 befinden, bewegt. Der Schlitten S wird zwischen einer Werkzeugwechselposition P1 und einer Bearbeitungsposition P2 hin und her bewegt. An der Bearbeitungsposition P2 wird ein Werkstück W beispielsweise unter Zugabe von Kühlmittel K mit auf den Spindeln, SP1, SP2 aufgesetzten Werkzeugen bearbeitet.

So werden beispielsweise mit Bohrern, die auf den Spindeln SP1, SP2 aufgebracht sind, Löcher in das Werkstück W gebohrt. Das SPS-Programm SProg, welches in Form der Zustandsgraphenbeschreibungssprache vorliegt, ist in diesem Beispielsfall in drei Ebenen aufgeteilt, in eine Entscheidungsebene EE, in eine Koordinierungsebene KE und in eine Antriebsebene AE. Die einzelnen Ebenen EE, KE, AE sind beispielsweise durch mehrere Komponenten realisiert, die jeweils durch einzelne Zustandsgraphen beschrieben sind. Die Zustandsgraphen können untereinander kommunizieren und mit der Umgebung beispielsweise über einen Nachrichtenaustausch oder über globale Variablen kommunizieren.

In einem Zustandsgraphen Entscheidung ZE der Entscheidungsebene EE wird beispielsweise entschieden, einen Rücklauf des Schlittens S durch Abgabe einer Nachricht "Freigabe_Rücklauf" FR einzuleiten. Die Nachricht "Freigabe_Rücklauf" FR wird an einen Zustandsgraphen Rücklauf ZR übermittelt. Der Zustandsgraph Rücklauf ZR reagiert auf die Nachricht "Freigabe_Rücklauf" FR beispielsweise mit einem Befehl "bef_spindel_aus" SA an einen Zustandsgraphen Spindel 1 ZS1 der Antriebsebene AE. In dem Zustandsgraphen Spindel 1 ZS1 wird beispielsweise daraufhin die erste Spindel SP1 durch Rücksetzen eines Aktors mit einem Befehl "spindel_aus" auf einen Wert 0 ausgeschaltet.

Allgemein kann auf ein SPS-Programm SProg üblicherweise noch von einer übergeordneten Leitsteuerung LS Einfluß ausgeübt werden. So ist es beispielsweise möglich, daß den Einheiten des SPS-Programms SProg ein Signal "alle_spindeln_aus" ASA zugeführt wird, auf die die Elemente mit dem Ausschalten der Spindeln SP1, SP2 reagieren müssen. In dem SPS-Programm SProg können eine beliebige Anzahl von Zustandsgraphen enthalten sein, beispielsweise ein Zustandsgraph zur Steuerung des Schlittens ZS oder auch ein Zustandsgraph ZS2 zur Steuerung der zweiten Spindel SP2. Auch ist es beispielsweise möglich, daß ein Zustandsgraph ZK zur Steuerung der Zuführung des Kühlmittels K vorgesehen ist.

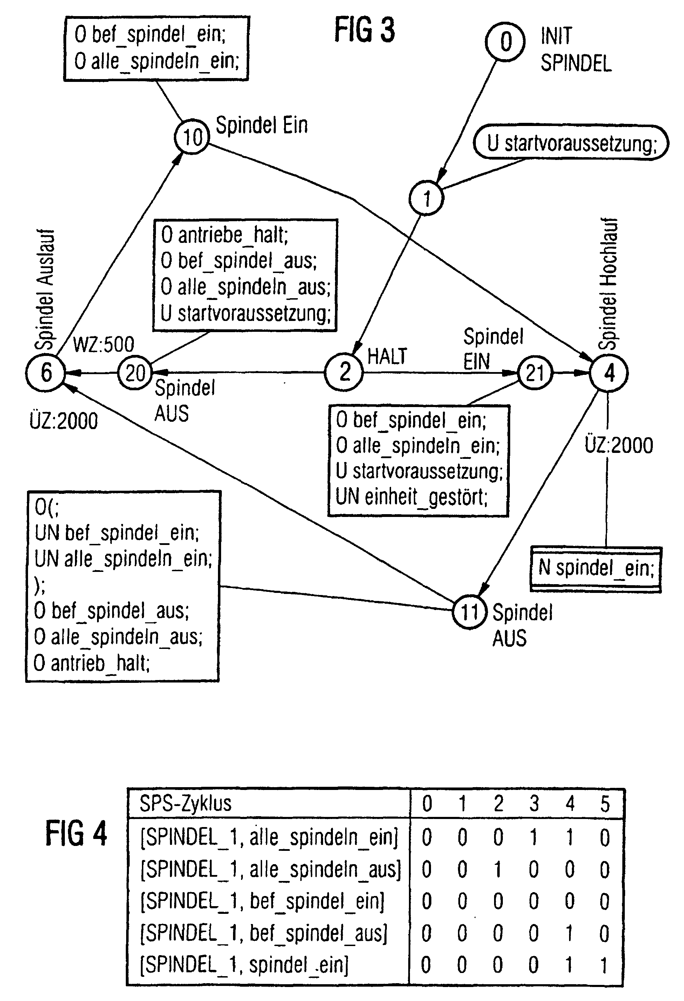

In Fig. 3 ist ein einfaches Beispiel des Zustandsgraphen Spindel 1 ZS1 dargestellt. Mit dem Zustandsgraphen Spindel 1 ZS1 wird eine Ansteuerung der ersten Spindel SP1 beschrieben. Der Zustandsgraph Spindel 1 ZS1 enthält einen Initialzustand INIT. Ferner enthält er weitere Zustände 2, 4 und 6. Ein Zustandsübergang beispielsweise von Zustand 6 nach Zustand 4 erfolgt genau dann, wenn die Transitionsbedingung 10 erfüllt ist, in diesem Beispielsfall dann, wenn die Werte der Variablen Befehl "spindel_ein = 1" oder "alle_spindeln_ein = 1" gilt.

In den Zuständen 2, 4 und 6 werden Aktionen ausgeführt, solange sich das SPS-Programm in den jeweiligen Zuständen 2, 4, 6 befindet.

In dem Zustand 4 wird beispielsweise der Wert einer Variable "Spindel_ein" auf den Wert 1 gesetzt, wodurch die erste Spindel SP1 aktiviert wird.

In dem Zustand 6 wird beispielsweise der Wert der Variable "Spindel_ein" auf den Wert 0 gesetzt, wodurch die erste Spindel SP1 deaktiviert wird.

Für die formale Verifikation FV wird von einem Benutzer mindestens eine Eigenschaft VE vorgegeben, die bei der formalen Verifikation FV überprüft wird. Unter der Eigenschaft VE ist eine Spezifikation des SPS-Programms SProg zu verstehen, die eine exakt definierte Bedeutung aufweist. Die Eigenschaft VE liegt üblicherweise in einer formalen Spezifikationssprache vor.

Mit einer Spezifikation wird ausgedrückt, was das SPS-Programm SProg tun darf bzw. nicht tun darf oder was unbedingt durch das SPS-Programm SProg geschehen muß.

Es ist in einer Weiterbildung des Verfahrens möglich, zusätzlich zu der Eigenschaft VE auch Annahmen vorzugeben, die ebenso bei der formalen Verifikation FV berücksichtigt werden. Die Annahmen werden ebenfalls in einer formalen Spezifikationssprache beschrieben.

Allgemein können eine beliebige Anzahl von Eigenschaften VE und Annahmen in dem Verfahren beschrieben und bei der formalen Verifikation FV berücksichtigt werden. Mit Annahmen werden Spezifikationen über eine Umgebung des jeweils zu verifizierenden SPS-Programms SProg beschrieben, die beispielsweise der Benutzer des Verfahrens voraussetzt.

Zur einfachen Beschreibung der Eigenschaften und Annahmen können beispielsweise natürlichsprachliche Schablonen mit einer jeweils exakten Bedeutung verwendet werden, die zur einfacheren Darstellung ohne Einschränkung der Allgemeingültigkeit im weiteren verwendet wird.

Im Rahmen dieses Dokumentes werden zur einfacheren Darstellung beispielsweise folgende typische syntaktischen Schablonen verwendet:
- IMMER GILT ...
- NIE GILT ...
- SOLANGE ... GILT...
- SOBALD ... GILT ...
- SOBALD ... DANN SOLANGE ... BIS ...

Eine denkbare zu verifizierende Eigenschaft VE für das erste Ausführungsbeispiel ist z. B., daß die Variable "Spindel_ein" entweder sofort oder spätestens nach einem SPS-Zyklus den Wert 0 aufweist, für den Fall, daß die Variable "bef_spindel_aus" oder die Variable "Alle_spindeln_aus" den Wert 1 aufweist.

Dies kann zur einfacheren Darstellbarkeit beispielsweise in folgender formalen Spezifikationssprache formuliert werden:
SOLANGE
   bef_spindel_aus == 1 oder alle_spindeln_aus ==1
GILT spätestens nach einem Zyklus
   spindel_ein == 0.

Durch die formale Verifikation FV wird überprüft, ob die Eigenschaft VE für das SPS-Programm SProg, d. h. in jedem möglichen Ablauf des SPS-Programms SProg, gilt.

Im Fehlerfall, d. h. für den Fall, daß die Eigenschaft VE für das SPS-Programm SProg nicht gilt, wird in einer Weiterbildung des Verfahrens eine Widerlegungssequenz WS ermittelt. In der Widerlegungssequenz WS werden ausgehend vom Initialstatusvektor INIT, in dem alle Variablen ihren Initialwert haben, die Werte der Eingabevariablen, Ausgabevariablen und Programmvariablen für jeden SPS-Zyklus angegeben, bis feststeht, daß die ermittelte Folge der SPS-Zyklen die zu verifizierende Eigenschaft nicht aufweist.

Es ist jedoch nicht unbedingt der Fall, daß die ermittelte Widerlegungssequenz WS echte Fehler beschreibt. Es kann auch vorkommen, daß mit der Widerlegungssequenz WS lediglich unrealistisches Verhalten des SPS-Programms SProg widergespiegelt wird. Die erklärt sich daraus, daß bei der formalen Verifikation FV zunächst jegliche Information über die Umgebung, d. h. die Schnittstellen des SPS-Programms SProg, beispielsweise über die Leitsteuerung LS, nicht bekannt ist.

Allgemein sind all diejenigen Teile eines SPS-Programms SProg unbekannt, die nicht Bestandteil des zu verifizierenden SPS-Programms SProg sind, jedoch beispielsweise über gemeinsame Speicherbereiche in Verbindung zu dem zu verifizierenden SPS-Programm SProg stehen.

Bei dem Verfahren wird zunächst der Umgebung des zu verifizierenden SPS-Programms ein beliebiges Verhalten unterstellt.

Mit Hilfe von Annahmen, die einer Schnittstellenspezifikation entsprechen, hat der Benutzer die Möglichkeit, ein vorgebbares Umgebungsverhalten für das zu verifizierende SPS-Programm SProg zu spezifizieren. In diesem Fall bedeutet eine erfolgreiche Verifikation, daß das SPS-Programm die zu verifizierende Eigenschaft unter den getroffenen Annahmen erfüllt.

Beispielsweise kann man in dem ersten Ausführungsbeispiel die fehlende Information über konsistentes Befehlsverhalten der Leitsteuerung LS, die sich außerhalb des beispielhaft zu verifizierenden Zustandsgraphen Spindel 1 ZS1 befindet, in folgender Annahme formulieren:
IMMER GILT
   alle_spindeln_ein == 0
ODER
   alle_spindeln_aus == 0

In diesem Fall wird die Annahme getroffen, daß von der Leitsteuerung LS niemals gleichzeitig ein Befehl "alle_spindeln_ein" und "alle_spindeln_aus" an die Elemente des SPS-Programms SProg übermittelt werden. Eine weitere Möglichkeit des Einsatzes einer Annahme ist beispielsweise dann vorteilhaft, wenn bestimmte Verhaltensabläufe bei der formalen Verifikation FV nicht berücksichtigt werden sollen. Möchte man beispielsweise den Handbetrieb der Einheit bei der formalen Verifikation FV ausschließen, kann beispielsweise folgende Annahme über eine speziell für den Handbetrieb vorgesehene Variable "ba_hand" getroffen werden:
IMMER
   ba_hand == 0

In Fig. 4 ist eine Widerlegungssequenz WS mit folgenden berücksichtigten Variablen dargestellt:
- [Spindel 1, alle_spindeln_ein],
- [Spindel 1, alle_spindeln_aus],
- [Spindel 1, bef_spindel_ein],
- [Spindel 1, bef_spindel_aus],
- [Spindel 1, Spindel_ein].

In jeder Spalte der Widerlegungssequenz WS wird jeweils zu einem eindeutig bezeichneten SPS-Zyklus der Wert der jeweiligen Variable in der entsprechenden Zeile dargestellt.

Aus Fig. 4 ist beispielsweise ersichtlich, daß in dem SPS-Zyklus 5 die erste Spindel SP1 eingeschaltet ist, obwohl in dem SPS-Zyklus 4, d. h. einem SPS-Zyklus zuvor, der Befehl Spindel_aus SA in Form des Wertes 1 der Variable [Spindel 1, bef_Spindel_aus] in dem SPS-Programm SProg vorlag.

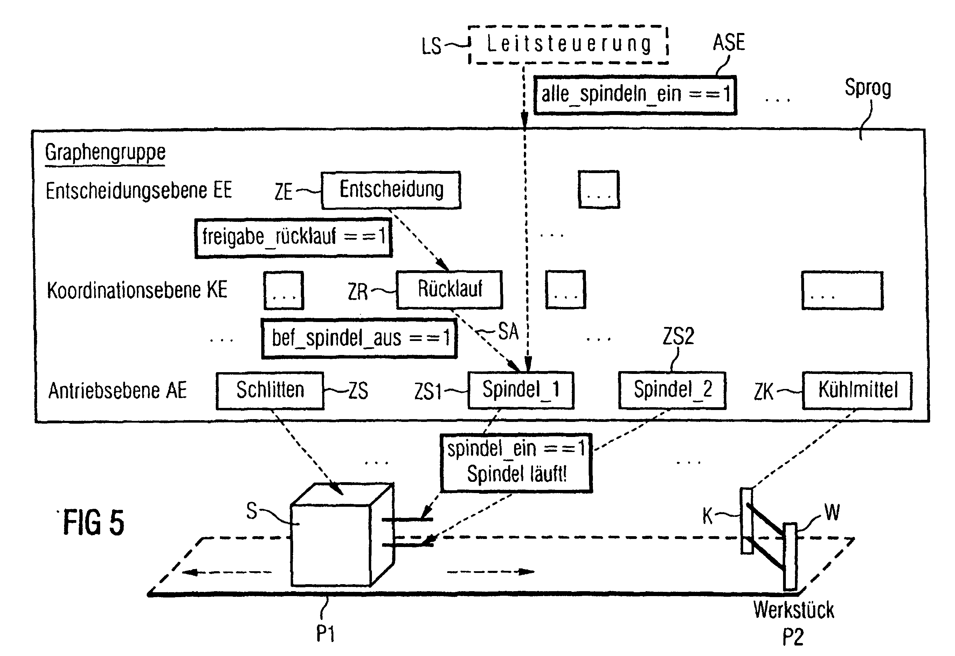

Diese Fehlersituation ist in der Fig. 5 dargestellt. Während der Rücklaufphase wird in diesem Fall der Befehl Spindel_aus SA von dem Zustandsgraph Rücklauf ZR gesendet. Gleichzeitig wird jedoch von der Leitsteuerung LS der Befehl alle_spindeln_ein ASE gesendet.

In dem SPS-Programm SProg wird jedoch der Befehl Spindel_aus SA von dem Zustandsgraphen Rücklauf ZR ignoriert. Es ist für den Benutzer nun leicht, den Fehler in dem SPS-Programm SProg zu erkennen.

In diesem Fall ist der Grund für das Fehlverhalten, beispielsweise darin zu sehen, daß von dem Zustand 6 des Zustandsgraphen Spindel 1 ZS1 aufgrund des Befehls der Leitsteuerung LS alle_spindeln_ein ASE in den Zustand 4 übergegangen wird, um die erste Spindel S1 zu aktivieren. Es werden jedoch in der Transitionsbedingung (vgl. Fig. 3) keine Ausschaltbefehle, beispielsweise bef_spindel_aus oder alle_spindeln_aus berücksichtigt, wie sie in der Widerlegungssequenz WS auftreten.

In diesem Beispielfall kann der Fehler dadurch behoben werden, daß die Transitionsbedingung von dem Zustand 6 in den Zustand 4 folgender Ausdruck in der Syntax beispielsweise einer Anweisungsliste AWL hinzugefügt wird:
UN bef_spindel_aus;
UN alle_spindeln_aus;
für das modifizierte SPS-Programm SProg kann die formale Verifikation FV jederzeit wiederholt werden, wodurch eine Überprüfung der Änderung leicht möglich ist.

### Zweites Ausführungsbeispiel

Nach einer groben Darstellung des ersten Ausführungsbeispiels wird nun in dem zweiten Ausführungsbeispiel detailliert beschrieben, wie die formale Verifikation FV durchgeführt wird.

In diesem zweiten Ausführungsbeispiel wird wiederum das SPS-Programm SProg mit einer Zustandsgraphensprache beschrieben. Dabei wird allgemein ein Zustandsgraphenprogramm für eine speicherprogrammierbare Steuerung durch eine Graphengruppe repräsentiert. Eine Graphengruppe enthält üblicherweise eine beliebige Anzahl von Zustandsgraphen. Ein Zustandsgraph besteht aus Zuständen, wobei der Zustand mit Nummer 0 als Initialzustand ausgezeichnet ist, und aus Transitionen.

Ein Zustand umfaßt üblicherweise drei Aktionsabschnitte:
- Eingangsabschnitt,
- zyklischer Abschnitt, und
- Ausgangsabschnitt.

Eine Transition beschreibt einen Zustandsübergang, der von einer Transitionsbedingung abhängt.

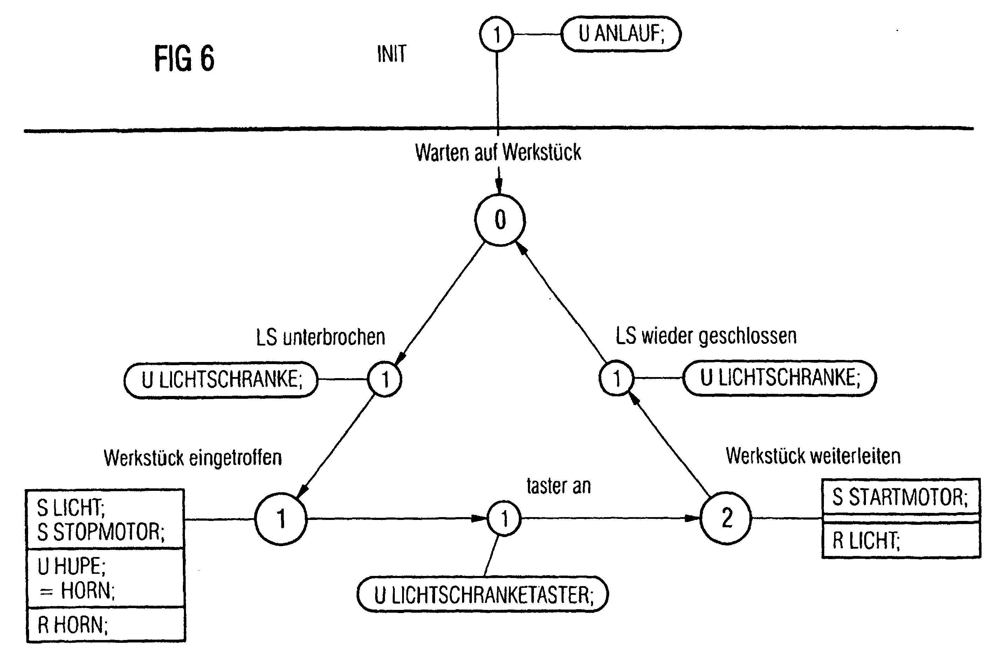

Graphisch werden, wie dies auch in Fig. 3 und in Fig. 6 ersichtlich ist, Zustände als Kreise dargestellt und Transitionen als Kanten, eventuell mit den Kanten zugewiesenen Prioritäten, die frei vorgebbar sind.

Den Kanten sind üblicherweise Transitionsbedingungen zugeordnet, die beispielsweise in Form sog. Anweisungslisten beschrieben sind. Ferner sind Aktionen, die in den Zuständen durchgeführt werden, üblicherweise ebenfalls in Anweisungslisten formuliert, die im weiteren als AWL-Code bezeichnet werden.

Ferner weist ein Zustandsgraph üblicherweise Graphengruppenattribute, Zustandsattribute sowie Transitionsattribute für die einzelnen Variablen, die in dem SPS-Programm verwendet werden, auf.

Zur Durchführung der formalen Verifikation FV wird in einem ersten Schritt eine textuelle Repräsentation des Zustandsgraphenprogramms von dem Rechner R eingelesen. Die textuelle Repräsentation des Zustandsgraphenprogramms weist üblicherweise folgende Abschnitte auf:
1. Diagnoseinformation, die üblicherweise sog. Formaloperanden und einen Zustandsgraphenprogrammtyp sowie eine Speicheradresse enthält, mit der angegeben wird, wo sich das Zustandsgraphenprogramm in dem Speicher des Rechners R befindet. Die Diagnoseinformation enthält üblicherweise auch Variablen, die nicht in dem Zustandsgraphenprogramm verwendet werden.
2. Beispielsweise eine Ausführungsreihenfolge des Zustandsgraphen.
3. Alle Zustandsgraphen des Zustandsgraphenprogramms, wobei ein Zustandsgraph im wesentlichen folgende Struktur üblicherweise aufweist:
   - Graphenattribute, beispielsweise einen Graphennamen und/oder eine Graphennummer,
   - eine Schnittstellendeklaration, die beispielsweise vom Benutzer deklarierte Formaloperanden enthält,
   - einen Überwachungsabschnitt, der beispielsweise in AWL-Code vorliegt,
   - die Zustände des jeweiligen Zustandsgraphen, wobei jeweils ein Zustand folgende Struktur aufweist:
      -- Zustandsattribute, z. B. Zustandsnummer, Sichtenattribut, Überwachungszeit, Wartezeit, etc.
      -- den Eingangsabschnitt, d. h. Aktionen, die während des Eingangsabschnittes durchgeführt werden, beispielsweise formuliert wiederum in AWL-Code,
      -- den zyklischen Abschnitt, wobei die Aktionen wiederum in AWL-Code beschrieben sind,
      -- den Ausgangsabschnitt, wiederum formuliert in AWL-Code.
   - Die Transitionen des jeweiligen Zustandsgraphen, wobei eine Transition z. B. folgende Struktur aufweist:
      -- Angabe des Ausgangszustandes der Transition und des Endzustandes der Transition,
      -- eventuell beispielsweise eine Priorität, die der jeweiligen Transition zugeordnet wird,
      -- Transitionsattribute, beispielsweise eine Wartezeitflagge, etc,
      -- eine Transitionsbedingung, die beispielsweise ebenfalls in AWL-Code formuliert ist.
   - Einen Verriegelungsabschnitt, der ebenfalls beispielsweise in AWL-Code vorliegt.

In Fig. 6 ist der Zustandsgraph des zweiten Ausführungsbeispiel dargestellt.

Mit dem SPS-Programm SProg wird folgende beispielhaft dargestellte Situation beschrieben. Nach Anlauf, d. h. nach Initialisierung INIT, wird im ersten Zustand 0 auf das Werkstück W gewartet, welches beispielsweise einem mit einer Lichtschranke LS begrenzten Gebiet zugeführt wird.

Wird das Werkstück W dem Gebiet zugeführt, wobei die Lichtschranke LS unterbrochen wird, erfolgt eine Transition zu dem zweiten Zustand 1, in dem in diesem Beispielfall ein Motor gestoppt wird, mit dem das Werkstück W bewegt wird. Ferner wird eine Hupe aktiviert, wodurch ein Laut ertönt.

Der Laut ertönt solange, bis eine Lichtschrankentaste aktiviert wird, wodurch die Transition in einem dritten Zustand 2 erfolgt, in dem der Motor wiederum gestartet wird und das Werkstück W aus dem Lichtweg der Lichtschranke LS heraus bewegt wird. Ist das Werkstück W aus dem Lichtweg der Lichtschranke LS heraus, d. h. ist die Lichtschranke LS wieder geschlossen, so geht das SPS-Programm SProg wieder in den ersten Zustand 0 über, und wartet auf ein weiteres Werkstück W. Ferner wird in dem dritten Zustand 2 das Werkstück W weitergeleitet zu einer beliebigen Weiterverarbeitung.

Ein Auszug aus der textuellen Beschreibung dieses Zustandsgraphenprogramms, also ein Beispiel eines Diagnoseinformationsteils, welches in Fig. 6 dargestellt ist, wird im folgenden gegeben:
STATE_DIAGRAM LICHTSCHRANKE 1
...
SUPERVISION
END_SUPERVISION
...
STATE 1
LABEL
Werkstueck eingetroffen
END_LABEL
NORMAL
ENTRY_ACTION
S LICHT;
S STOPMOTOR;
END_ENTRY_ACTION
CYCLIC_ACTION
U HUPE;
= HORN;
END_CYCLIC_ACTION
EXIT_ACTION
R HORN;
END_EXIT_ACTION
END_STATE
TRANSITION FROM 1 TO 2
LABEL
taster an
END_LABEL
PRIORITY 1 NORMAL
TRANSITION_CONDITION
U LICHTSCHRANKETASTER;
END_TRANSITION_CONDITION
END_TRANSITION
STATE 2
LABEL
Werkstueck weiterleiten
END_LABEL
NORMAL
ENTRY_ACTION
S STARTMOTOR;
END_ENTRY_ACTION
EXIT_ACTION
R LICHT;
END_EXIT_ACTION
END_STATE
...
INTERLOCK
END_INTERLOCK

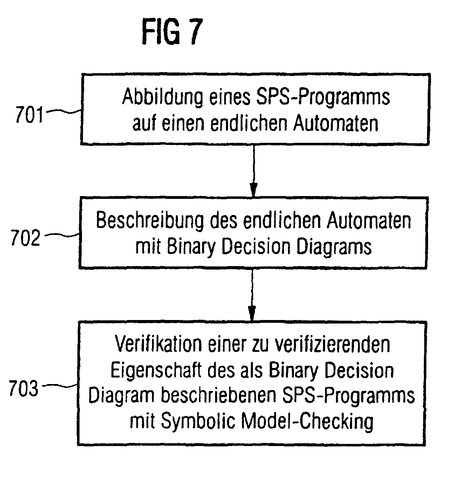

Das SPS-Programm SProg wird auf mindestens einen endlichen Automaten abgebildet 701 (vgl. Fig. 7).

Zur einfacheren Darstellung wird in dem zweiten Ausführungsbeispiel im weiteren lediglich die Ermittlung der Beschreibung der Transitionsrelation für den endlichen Automaten von dem zweiten Zustand 1 zu dem dritten Zustand 2 erläutert.

Dieses prinzipielle Vorgehen ist jedoch auf alle weiteren Transitionen und Variablen, wie im weiteren erläutert wird, entsprechend anzuwenden und zu berücksichtigen.

Beispielsweise werden in einem ersten Schritt Modellierungsvariablen zur Beschreibung des Teils der operationalen Semantik des SPS-Programms SProg, der implizit in der Programmiersprache festgelegt sind, aber nicht explizit durch Programmvariable dargestellt wird, aus der Diagnoseinformation und der Schnittstellendeklaration ermittelt. Eür das zweite Ausführungsbeispiel wurden beispielsweise folgende Modellierungsvariablen eingefügt:
- [internal,system,current_sd]
   var([internal,system,current_sd],state,enum(['Reading of Process-Variables' = [0,0,0],'Writing of Process-Variables' = [0,0,1],'LICHTSCHRANKE' = [0,1,0],'BAND' = [0,1,1],'STATION2' = [1,0,0],'STATION1' = [1,0,1],'STATION3' = [1,1,0]]),[current_sd1,current_sd2,current_sd3]),
   dient zur Beschreibung des Zustandsgraphen, in dem sich gerade die Programmkontrolle befindet
- [internal,system,ZG_NAME,current_state]
   var([internal,system,'LICHTSCHRANKE',current_state],s tate,enum(['1' = [0,1],'2' = [1,0],'0' = [0,0]]), ['LICHTSCHRANKEcurrent_statel','LICHTSCHRANKEcurrent_ state0'])
   dient zur Beschreibung des Zustandsgraphen-Zustandes, in dem sich gerade die Programmkontrolle befindet
- [internal,system,ZG_NAME,last_state]
   var([internal,system,'LICHTSCHRANKE',last_state],stat e,enum(['1' = [0,1],'2' = [1,0], '0' = [0,0]]), ['LICHTSCHRANKElast_statel','LICHTSCHRNNKElas t_state0']),
   dient zur Beschreibung des Zustandsgraphen-Zustandes, verschieden vom aktuellen Zustand, in dem sich die Programmkontrolle zuletzt befunden hat.
- [internal,system,ZG_NAME,state_change]
   var([internal,system,'LICHTSCHRANKE',state_change],state,b oolean,['LICHTSCHRANKEstate_change_0']),
   dient zur Angabe, ob die Programmkontrolle im PLC-Zyklus zuvor in einem anderen Zustandsgraphen-Zustand gewesen ist, also, ob gerade eine Zustandsänderung eingetreten ist.
- [internal,system,ZG_NAME,wait_time_expired]
   var([internal,system,'LICHTSCHRANKE',wait_time_expired],st ate,boolean,['LICHTSCHRANKEwait_time_expired_0']),
   dient zur Abstraktion vom Wartezeitattribut
- [internal,system,global_mit_flag]
   var([internal,system,global_init_flag],state,boolean,[glob al_init_flag0])
   dient zur Angabe, ob sich das Programm in der Initialisierungsphase befindet oder nicht.
- [internal,system,oneofInput]
   wird für Abstraktionen verwendet (s. u.) Modus ist 'input'. Typ ist struct von Boolean. Größe von struct ist gleich Anzahl der Abstraktionen.

Mit "internal, system" wird angegeben, daß es sich bei der Variable um eine (System-) Modellierungsvariable handelt, die nicht Bestandteil des SPS-Programms SProg ist.

Unter Verwendung der Modellierungsvariablen werden wie im weiteren beschrieben, iterativ für jede Transition des jeweiligen Zustandsgraphen eine Transition des endlichen Automaten unter Berücksichtigung der betroffenen Ausgangszustände und Zielzustände der jeweiligen Transition gebildet.

Zusätzlich wird für jeden Zustand des Zustandsgraphen eine Transition des endlichen Automaten für den Fall gebildet, daß keine von dem jeweiligen Zustand abgehende Transitionsbedingung erfüllt ist und somit im selben Zustand verblieben wird.

Anschließend werden die Modellierungsvariablen vollständig in dem Format des endlichen Automaten beschrieben, da nunmehr die Information über die Werte beispielsweise des Graphennamen oder der Zustandsnummer vorliegt, von denen Typen der meisten Modellierungsvariablen abhängen, die im weiteren beschrieben werden.

Es hat sich als vorteilhaft herausgestellt, für eine Modellierungsvariable "current_sd" ihren Aufzählungstyp um zwei Werte zu erweitern, "Reading of Process Variables" und "Writing of Process Variables" . Hat die Variable current_sd einen ersten Wert "Reading of Process Variables", so wird eine nichtdeterministische Transition des endlichen Automaten gebildet, mit der alle Variablen des endlichen Automaten, die auf Eingangsadressen des endlichen Automaten gelegt sind, beliebig verändert werden, während alle anderen Variablen des endlichen Automaten mit Ausnahme der Modellierungsvariablen current_sd und einer globalen Variable global_init_flag unverändert bleiben.

Im weiteren werden Variablen des endlichen Automaten als FSM-Variablen (FSM=Finite State Machine) bezeichnet. Hat die Variable current_sd einen zweiten Wert "Writing of Process Variables", so wird im Automaten beschrieben, daß alle FSM-Variablen unverändert bleiben und nur die Modellvariable current_sd auf den Wert "Reading of Process Variables" geändert wird.

Ferner hat es sich als vorteilhaft herausgestellt, daß pro Zustandsgraph zusätzlich für eine Globalinitialisierung des Zustandsgraphenprogramms jeweils eine Transition des endlichen Automaten gebildet wird.

Eine Transition des endlichen Automaten wird im weiteren als FSM-Transition bezeichnet.

In einem weiteren Verfahrensschritt werden Variablenmodi, Variablentypen und BDD-Variablennamen für Formaloperanden ermittelt.

Im weiteren wird ein einfaches Beispiel für diese Vorgehensweise dargestellt, die für alle weiteren Elemente des SPS-Programms SProg ebenso durchgeführt wird.

In dem oben beschriebenen Diagnoseinformationsteil ist folgende Zeile zu finden:
Lichtschranke 1 Hupe BOOL E0.1
Aus dieser Zeile wird für den endlichen Automaten folgende FSM-Variable gebildet:
   var([internal,"LICHTSCHRANKE","HUPE"], state, bit, ["E_0.1"])

Allgemein werden folgende Schritte bei der Bestimmung der Variablenmodi, der Variablentypen und der BDD-Variablennamen durchgeführt:
- ein FSM-Variablenname wird aus den Parametern internal, dem Zustandsgraphennamen und dem Formaloperandennamen gebildet.
- Ein Variablenmodus des endlichen Automaten wird der Wert state zugewiesen.
- Ein Variablentyp des endlichen Automaten, im weiteren als FSM-Variablentyp bezeichnet, ergibt sich aus dem Zustandsgraphentyp, beispielsweise wird aus dem Zustandsgraphentyp Bool der FSM-Variablentyp Bit aus dem Zustandsgraphentyp Byte ein FSM-Variablentyp 8-Bit-Array, etc.
- Eine Anzahl benötigter BDD-Variablen des endlichen Automaten, im weiteren als FSM- BDD-Variable bezeichnet, ergibt sich aus dem generierten FSM-Variablentyp. In dem obigen Beispiel entspricht dies genau einer BDD-Variable.
- Ein Name der FSM-BDD-Variablen ergibt sich aus Adressbits, auf die der Formaloperand abgebildet wird. Im obigen Beispiel ist der BDD-Variablenname "E_0.1".

Ferner ist es vorteilhaft, Spezifikationen von im Zustandsgraphenprogramm aufgerufenen Funktion zu berücksichtigen.

Diese Spezifikationen sagen aus, welche Formaloperanden von der aufgerufenen Funktion verändert werden und auf welche Weise die Formaloperanden verändert werden.

Der Funktionsaufruf wird, wie im weiteren beschrieben wird, wie alle anderen AWL-Befehle bearbeitet. Fehlt eine explizite Spezifikation, wird implizit angenommen, daß genau die aufgerufenen Aktualparameter beliebig verändert werden können, was unter Verwendung von im weiteren beschriebenen Abstraktionen realisiert wird.

Ferner ist es ebenso vorteilhaft, Spezifikationen von Umgebungsänderungen zu berücksichtigen. Diese Spezifikationen sagen aus, welche Formaloperanden von der Umgebung verändert werden und auf welche Weise sie verändert werden. Dabei ist es vorteilhaft, nur Formaloperanden zu berücksichtigen, die von dem Zustandsgraphenprogramm gelesen aber nicht beschrieben werden. Fehlt eine explizite Spezifikation, wird implizit angenommen, daß die Umgebung alle Leseformaloperanden beliebig verändern kann. Dies wird durch die Modellvariable current_sd mit dem Wert "Reading of Process Variables" modelliert.

Abstraktionen werden benötigt, wenn konkrete Werte unbekannt sind oder der Wertebereich einer Variablen unendlich ist. Abstraktionen sind beispielsweise erforderlich bei der Beschreibung einer Wartezeit, einer Überwachungszeit, allgemein bei Zeitfunktionen, bei Zählfunktionen, bei Spezifikationen und beispielsweise bei einem fehlenden Initialwert in verschiedenen Kontexten, z. B. bei einer Zuweisung eines nichtinitialisierten Registerwertes.

Eine Abstraktion von einer Variablen v ist beispielsweise die Zuweisung einer frei vorgebbaren Komponente k von oneofInput (vgl. oben) in einer FSM-Transition.

Die entsprechende Teilformel einer im weiteren beschriebenen FSM-Transitionsrelation könnte dann sein:
next (v)=[internal, system, oneofInput]..k
oder
anstelle der Variablen v in einem Teilausdruck einer FSM-Transition die Berücksichtigung der Komponente k, also beispielsweise anstatt
next (w)=v
würde sich ergeben:
next (w) = [internal, system, oneofInput]..k.

Ferner ist es vorgesehen, eine Initialzustandsmenge des endlichen Automaten, die im weiteren als FSM-Initialzustandsmenge bezeichnet wird, zu ermitteln. Dabei werden alle Modellierungsvariablen festgelegt. Einem Formaloperanden Z_FEHLER wird der Wert false zugewiesen, alle Leseformaloperanden sind unten spezifiziert und den Bits aller sonstigen Formaloperanden wird der Wert false zugewiesen.

Ferner werden folgende Werte in der Initialzustandsmenge zugewiesen:
1. current_sd auf den ersten ZG der Ausführungsreihenfolge
2. alle current_state und last_state auf den fest vorgegebenen Initialzustand 0
3. alle wait_time_expired und Z_FEHLER auf false
4. global_init_flag auf true
   [internal,system,current_sd] = 'LICHTSCHRANKE' ^ (true ^
   [internal,system,'LICHTSCHRANKE',current_state] = '0' ^
   [internal,system,'LICHTSCHRANKE',last_state] = '0' ^
   [internal,system,'LICHTSCHRANKE',state_change] = true ^
   [internal,system,'LICHTSCHRANKE',wait_time_expired] = false ^
   [internal,'LICHTSCHRANKE','Z_FEHLER'] = false ^
   [internal,system,'BAND',current_state] = '0' ^
   [internal,system,'BAND',last_state] = '0' ^
   [internal,system,'BAND',state_change] = true ^
   [internal,system,'BAND',wait_time_expired] = false ^
   [internal,'BAND','Z_FEHLER']= false ^
   [internal,system,'STATION2',current_state]= '0' ^
   [internal,system,'STATION2',last_state] = '0' ^
   [internal,system,'STATION2',state_change]= true ^
   [internal,system,'STATION2',wait_time_expired] = false ^
   [internal,'STATION2','Z_FEHLER'] = false ^
   [internal,system,'STATION1',current_state], = '0' ^
   [internal,system,'STATION1',last_state] = '0' ^
   [internal,system,'STATION1',state_change] = true ^
   [internal,system,'STATION1',wait_time_expired]= false ^
   [internal,'STATION1','Z_FEHLER'] = false ^
   [internal,system,'STATION3',current_state]= '0' ^
   [internal,system,'STATION3',last_state] = '0' ^
   [internal,system,'STATION3',state_change] = true ^
   [internal,system,'STATION3',wait_time_expired] = false ^
   [internal,'STATION3','Z_FEHLER'] = false) ^ true ^ true ^
   true ^ [internal,system,global_init_flag] = true ^
   "alle restlichen Formaloperanden-Bits bis auf M_4.0 (BA_HAND) auf false"

Weiterhin wird eine Transitionsrelation des endlichen Automaten, die im weiteren als FSM-Transitionsrelation bezeichnet wird, ermittelt.

Diese wird sowohl für eine Initialisierungsphase als auch für eine Laufzeitphase ermittelt. Im weiteren wird jedoch lediglich die Ermittlung der FSM-Transitionsrelation für die Laufzeitphase beschrieben, da diese in der Initialisierungsphase entsprechend durchgeführt wird mit dem Unterschied, daß die globale Modellierungsvariable global_init_flag der Wert true zugewiesen wird.

Ansonsten ist die Ermittlung der FSM-Transitionsrelation für die Initialisierungsphase prinzipiell identisch mit der für die Laufzeitphase.

Die Berechnung der FSM-Transitionsrelation wird beispielhaft an der Transition des zweiten Ausführungsbeispiels von dem zweiten Zustand 1 zu dem dritten Zustand 2 dargestellt.

Folgende Abschnitte und Attribute werden symbolisch evaluiert:
1. Überwachungsabschnitt des zweiten Zustands 1,
2. Transitionsbedingung von dem zweiten Zustand 1 zu dem dritten Zustand 2;
3. Zyklischer Abschnitt des zweiten Zustandes 1;
4. Austrittsabschnitt des zweiten Zustandes 1;
5. Eingangsabschnitt des dritten Zustandes 2;
6. zyklische Abschnitte des dritten Zustandes 2;
7. Verriegelungsabschnitt des zweiten Zustandes 1.

Die Evaluierung der einzelnen Abschnitte erfolgt beispielsweise durch sukzessives Evaluieren der einzelnen AWL-Befehle, in denen die symbolische Wirkung der einzelnen Befehle in Abhängigkeit vorangegangener Befehle ermittelt wird. Die Evaluierung zweier aufeinanderfolgender Abschnitte ergibt sich analog.

Im folgenden werden zwei Beispiel für die Evaluierung des Befehls "U HUPE" und des Befehls "HORN" dargestellt:

Der Befehl "U HUPE" hat Wirkung auf ein internes Register VKE, das keine FSM-Variable ist:
- neu(VKE) = HUPE ^ VKE

Der Befehl "HORN" hat folgende Wirkung:
- neu(HORN) = VKE) ^ neu(VKE) = VKE

Weiterhin wird im folgenden beispielhaft die Evaluierung mehrerer Befehle an dem Eingangsabschnitts des zweiten Zustands 1 dargestellt:

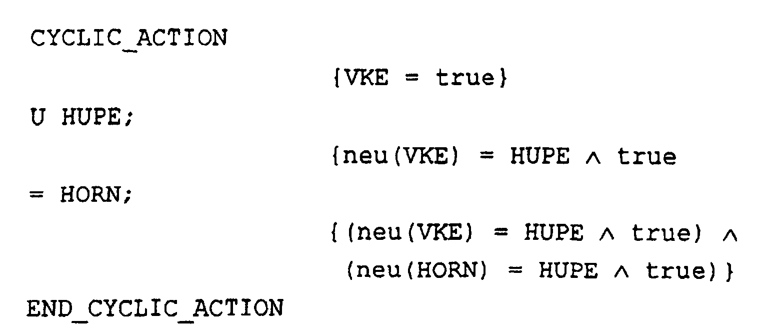

hat die Wirkung:
- neu(HORN) = HUPE

Dieser oben beschriebene Abschnitt wird in eine Darstellung des endlichen Automaten ohne BDDs abgebildet.

Dabei hat beispielsweise das interne Format des endlichen Automaten folgende Struktur:
1. Projektname (1. Zeile)
2. Einen Abschnitt mit folgender zyklischer Struktur, durch den jeweils die FSM-Transitionen prädikatenlogisch repräsentiert werden:
   - Ein Name des Zustandsgraphen sdName,
   - eine Liste von FSM-Variablen, die nicht von dem Zustandsgraphen verändert werden, die als SDstable bezeichnet werden,
   - optionale, für das Verfahren unbedeutende Parameter startprio, statechange, statenumber,
   - eine Liste von FSM-Variablen, die von einer im weiteren näher beschriebenen FSM-Transition nicht verändert werden, bezeichnet mit transstable,
   - eine prädikatenlogische Transitionsbedingung condFormula,
   - eine prädikatenlogische Formel über die Wertänderung der FSM-Variablen in dieser Transition, bezeichnet als nextFormula.
3. Einen Abschnitt über einen Teil des endlichen Automaten im FSM-Format, der symbolische Informationen enthält, die nicht in einem BDD-Format vorliegen. Enthalten sind in diesem Abschnitt beispielsweise ein Name des endlichen Automaten FSMname, symbolische Namen für BDD-Variablen fsmArgs, eine Liste der Reihenfolge der symbolischen Namen der BDD-Variablen, fsmOrder, eine Liste von abgeleiteten Variablentypen für den jeweiligen endlichen Automaten zusammen mit der jeweiligen Definition des Variablentyps fsmTypDefs, eine Liste fsmVars aller FSM-Variablen des endlichen Automaten, sowie eine Angabe einer hierarchischen Struktur der FSM-Variablen fsmstructure, der jedoch für die Erfindung unwesentlich ist.

Für die beispielhaft dargestellte Transition ergibt sich folgende FSM-Transition in dem internen Format:

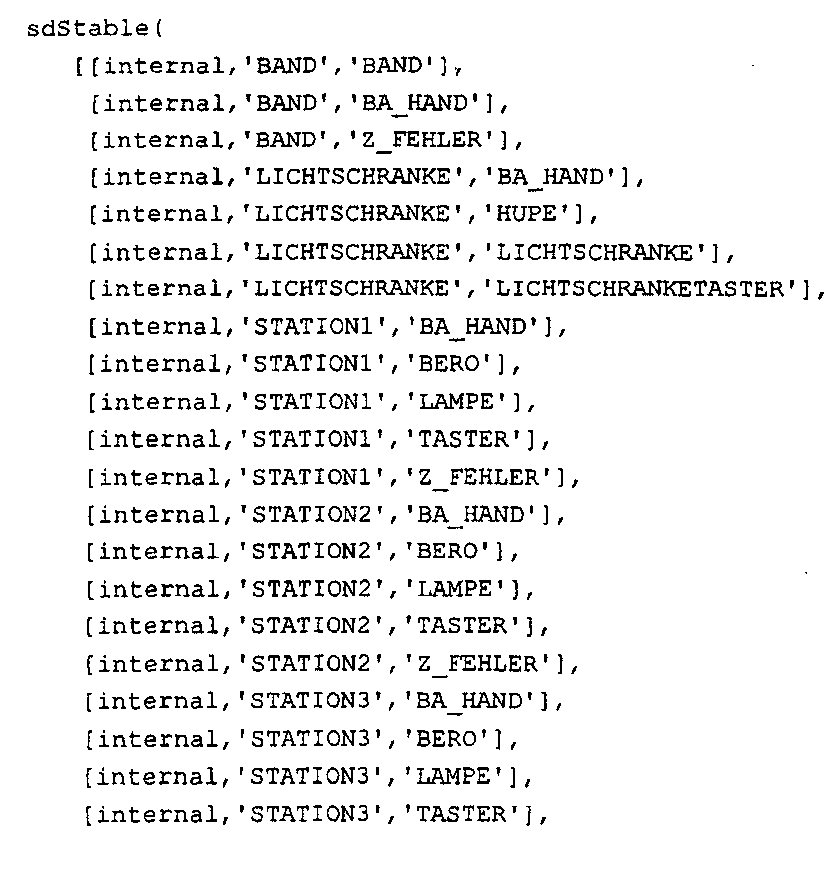

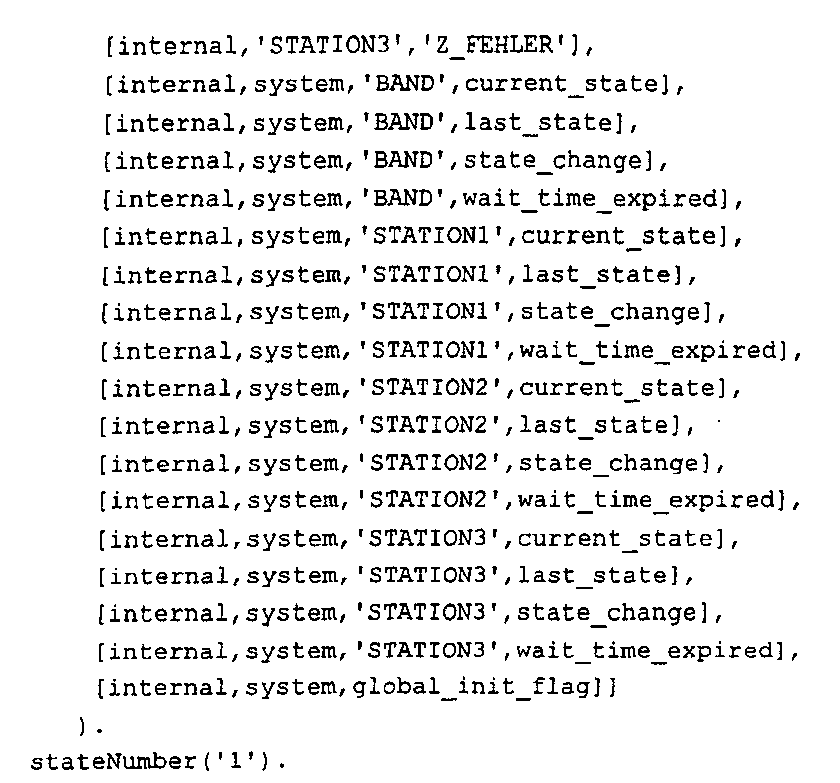

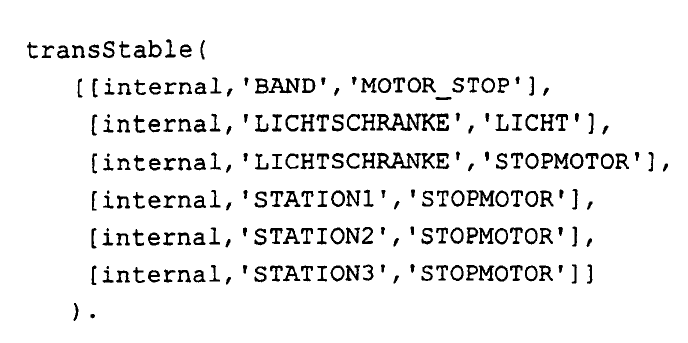

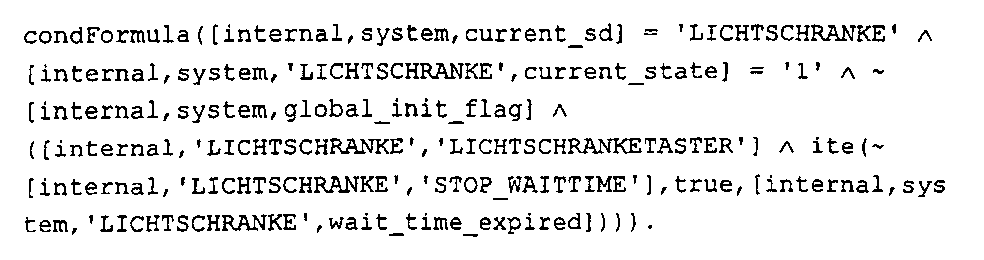

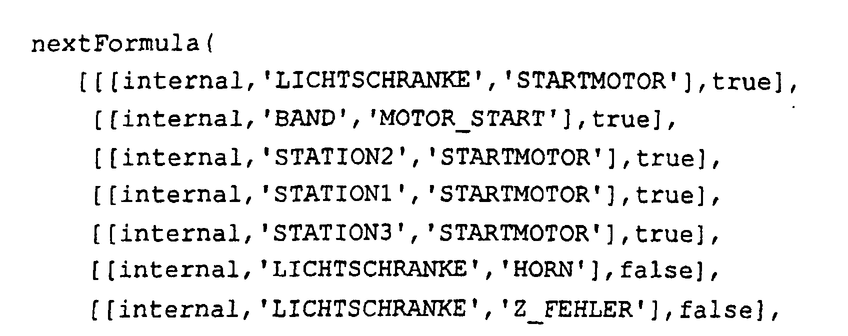

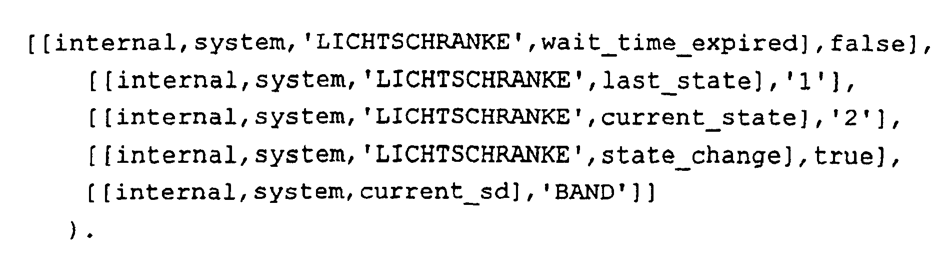

Anschließend wird die FSM-Transition aus der internen Darstellung in eine rein logische Formeldarstellung überführt, wobei aus 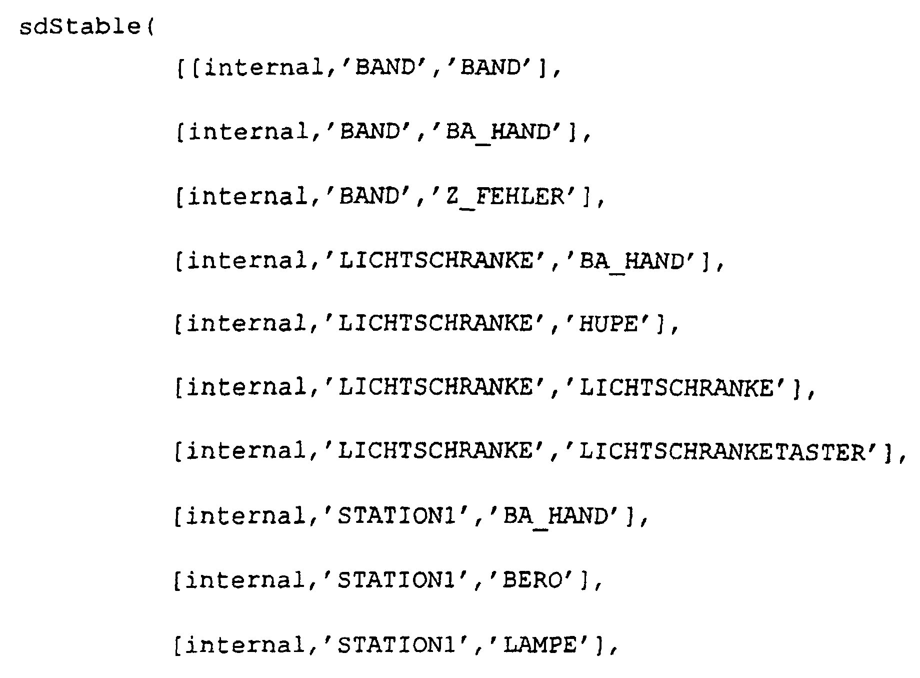 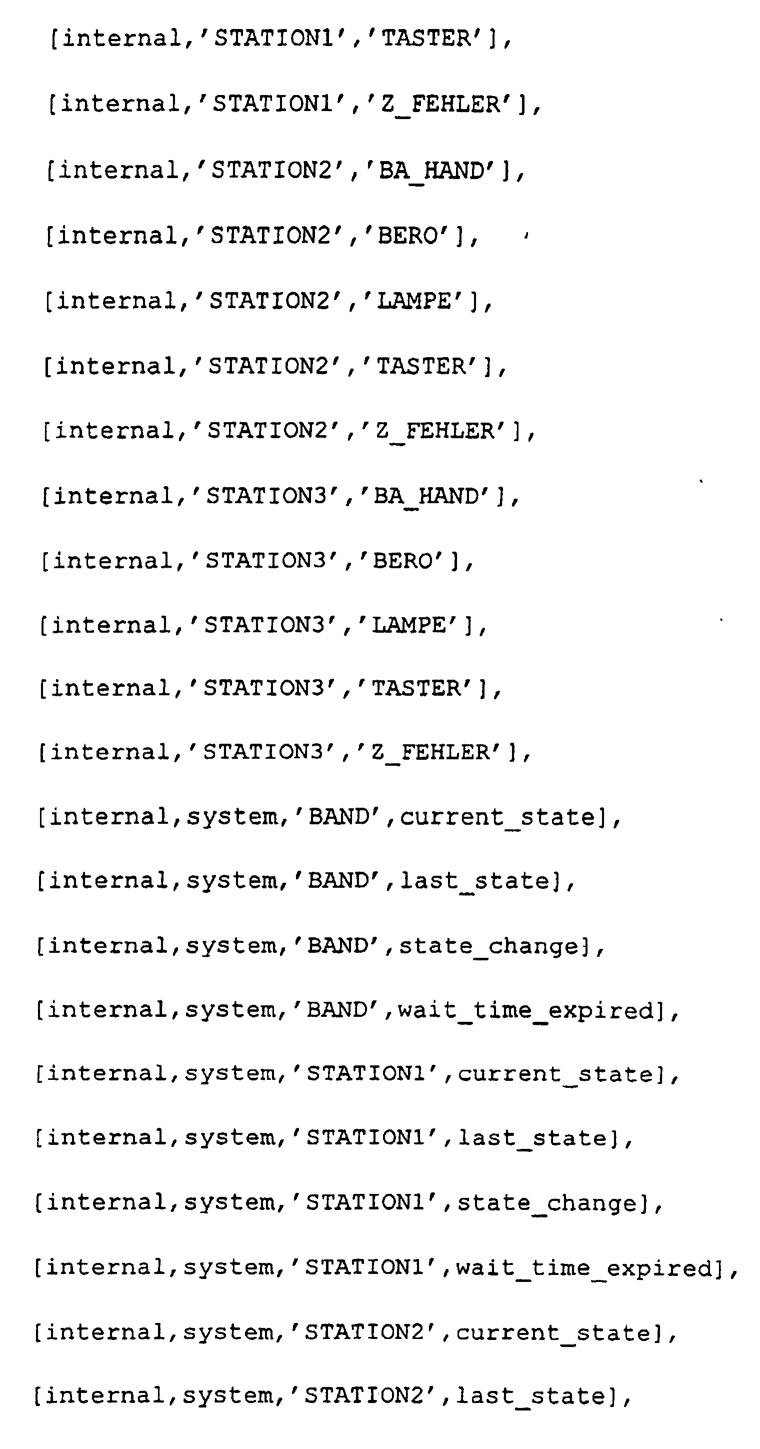 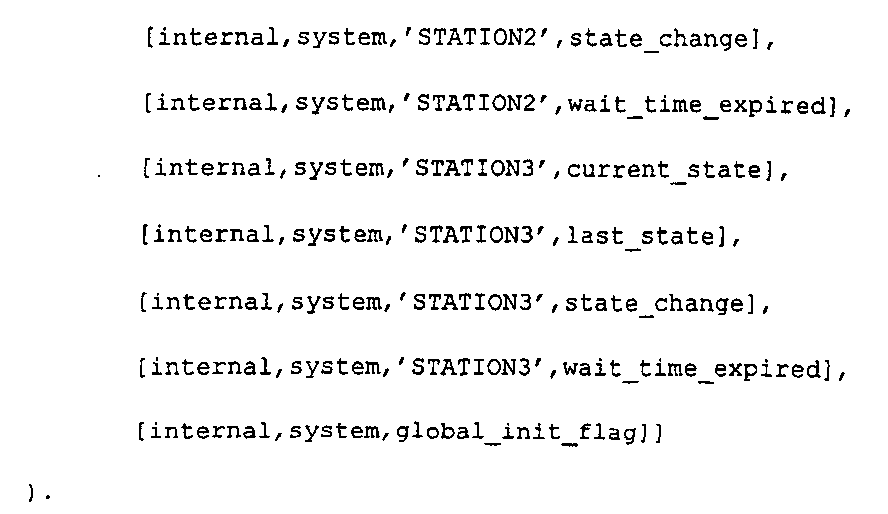 startPrio((1 , 0)).
stateChange([internal,system,'LICHTSCHRANKE',state_change],tr ue,false).
stateNumber(globalinit). 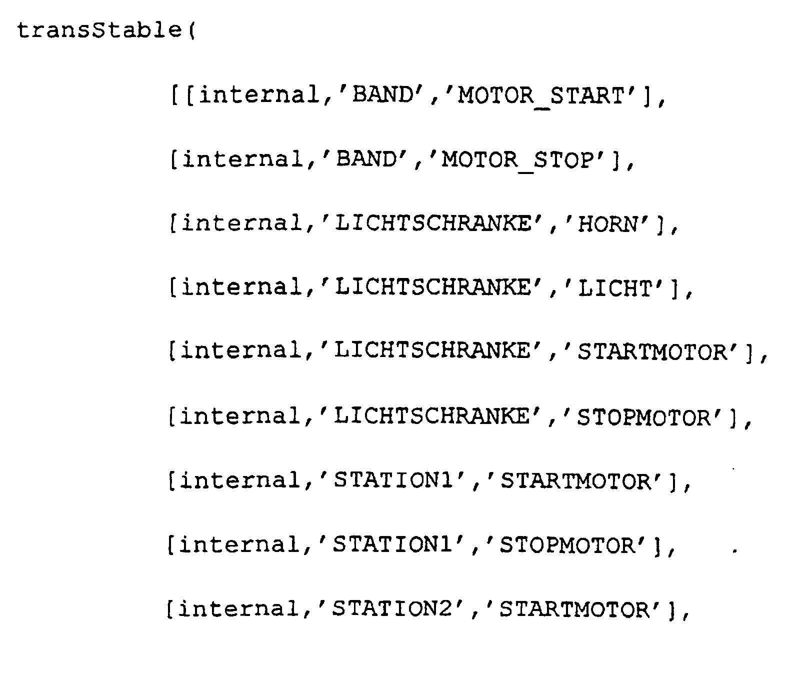 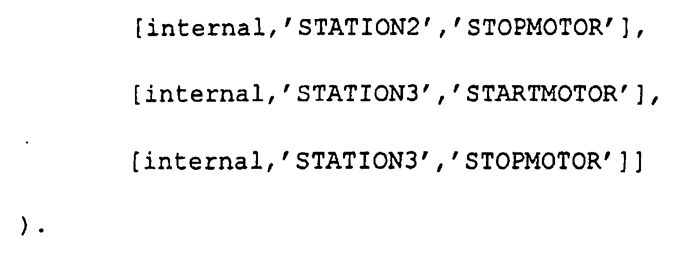 condFormula([internal,system,current_sd] = 'LICHTSCHRANKE' /\ [internal,system,global_init_flag]). 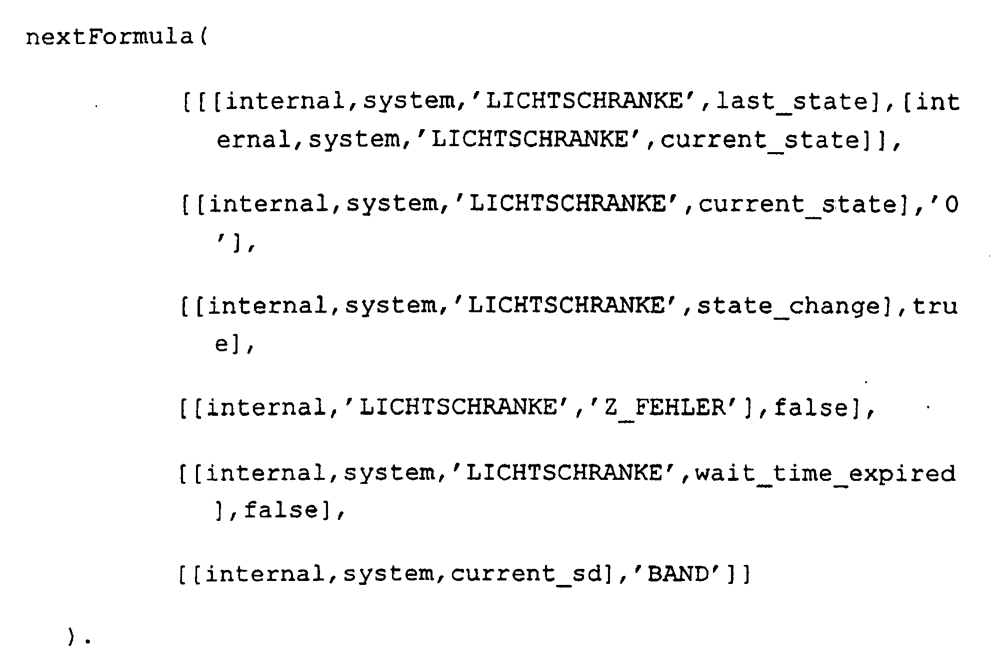 wird:
next([internal,'BAND','BAND'])=[internal,'BAND','BAND'] ^
next([internal,'BAND','BA_HAND'])= [internal,'BAND','BA_HAND'] ^
next([internal,'BAND','Z_FEHLER'])=[internal,'BAND','Z_FEHLER '] ^
next([internal,'LICHTSCHRANKE','BA_HAND'])=[internal,'LICHTSC HRANKE','BA_HAND'] ^
next([internal,'LICHTSCHRANKE','HUPE'])=[internal,'LICHTSCHRA NKE','HUPE'] ^
next([internal,'LICHTSCHRANKE','LICHTSCHRANKE'])= [internal,'LICHTSCHRANKE','LICHTSCHRANKE'] ^
next([internal,'LICHTSCHRANKE','LICHTSCHRANKETASTER'])= [internal,'LICHTSCHRANKE','LICHTSCHRANKETASTER'] ^
next([internal,'STATION1','BA_HAND'])= [internal,'STATION1','BA_HAND'] ^
next([internal,'STATION1','BERO'])= [internal,'STATION1','BERO'] ^
next([internal,'STATION1','LAMPE'])= [internal,'STATION1','LAMPE'] ^
next([internal,'STATION1','TASTER'])= [internal,'STATION1','TASTER'] ^
next([internal,'STATION1','Z_FEHLER'])= [internal,'STATION1','Z_FEHLER'] ^
next([internal,'STATION2','BA_HAND'])= [internal,'STATION2','BA_HAND'] ^
next([internal,'STATION2','BERO'])= [internal,'STATION2','BERO'] ^
next([internal,'STATION2','LAMPE'])= [internal,'STATION2','LAMPE'] ^
next([internal,'STATION2','TASTER'])= [internal,'STATION2','TASTER'] ^
next([internal,'STATION2','Z_FEHLER'])= [internal,'STATION2','Z_FEHLER'] ^
next([internal,'STATION3','BA_HAND'])= [internal,'STATION3','BA_HAND'] ^
next([internal,'STATION3','BERO'])= [internal,'STATION3','BERO'] ^
next([internal,'STATION3','LAMPE'])= [internal,'STATION3','LAMPE'] ^
next([internal,'STATION3','TASTER'])= [internal,'STATION3','TASTER'] ^
next([internal,'STATION3','Z_FEHLER'])= [internal,'STATION3','Z_FEHLER'] ^
next([internal,system,'BAND',current_state])= [internal,system,'BAND',current_state] ^
next([internal,system,'BAND',last_state])= [internal,system,'BAND',last_state] ^
next([internal,system,'BAND',state_change])= [internal,system,'BAND',state_change) ^
next([internal,system,'BAND',wait_time_expired])= [internal,system,'BAND',wait_time_expired] ^
next([internal,system,'STATION1',current_state])= [internal,system,'STATION1',current_state] ^
next([internal,system,'STATION1',last_state])= [internal,system,'STATION1',last_state] ^
next([internal,system,'STATION1',state_change])= [internal,system,'STATION1',state_change] ^
next([internal,system,'STATION1',wait_time_expired])= [internal,system,'STATION1',wait_time_expired] ^
next([internal,system,'STATION2',current_state])= [internal,system,'STATION2',current_state] ^
next([internal,system,'STATION2',last_state])= [internal,system,'STATION2',last_state] ^
next([internal,system,'STATION2',state_change])= [internal,system,'STATION2',state_change] ^
next([internal,system,'STATION2',wait_time_expired]) = [internal,system,'STATION2',wait_time_expired] ^
next([internal,system,'STATION3',current_state])=[internal,sy stem,'STATION3',current_state] ^
next([internal,system,'STATION3',last_state])=[internal,syste m,'STATION3',last_state] ^
next([internal,system,'STATION3',state_change])=[internal,sys tem,'STATION3',state_change] ^
next([internal,system,'STATION3',wait_time_expired])=[interna l,system,'STATION3',wait_time_expired] ^
next([internal,system,global_init_flag])=[internal,system,glo bal_init_flag] ^

next( [internal,'BAND','MOTOR_START'])= [internal,'BAND','MOTOR_START'] ^
next([internal,'BAND','MOTOR_STOP'])= [internal,'BAND','MOTOR_STOP'] ^
next([internal,'LICHTSCHRANKE','HORN'])= [internal,'LICHTSCHRANKE','HORN'] ^
next([internal,'LICHTSCHRANKE','LICHT'])= [internal,'LICHTSCHRANKE','LICHT'] ^
next([internal,'LICHTSCHRANKE','STARTMOTOR'])= [internal,'LICHTSCHRANKE','STARTMOTOR'], ^
next([internal,'LICHTSCHRANKE','STOPMOTOR'])= [internal,'LICHTSCHRANKE','STOPMOTOR'] ^
next([internal,'STATION1','STARTMOTOR']) = [internal,'STATION1','STARTMOTOR' ^
next([internal,'STATION1','STOPMOTOR'])= [internal,'STATION1','STOPMOTOR'] ^
next([internal,'STATION2','STARTMOTOR'])= [internal,'STATION2','STARTMOTOR'] ^
next([internal,'STATION2','STOPMOTOR'])= [internal,'STATION2','STOPMOTOR'] ^
next([internal,'STATION3','STARTMOTOR'])= [internal,'STATION3','STARTMOTOR'] ^
next([internal,'STATION3','STOPMOTOR'])= [internal,'STATION3','STOPMOTOR'] ^
[internal,system,current_sd] = 'LICHTSCHRANKE' ^
[internal,system,global_init_flag] ^
next([internal,system,'LICHTSCHRANKE',last_state])=[internal, system,'LICHTSCHRANKE',current_state] ^
   next([internal,system,'LICHTSCHRANKE',current_state ])='0'] ^
   next([internal,system,'LICHTSCHRANKE',state_change] )=true] ^
   next([internal,'LICHTSCHRANKE','Z_FEHLER'])=false] ^
   next([internal,system,'LICHTSCHRANKE',wait_time_exp ired])=false] ^
   next([internal,system,current_sd])='BAND']

Dieses Verfahren wird für alle Transitionsrelationen des endlichen Automaten durchgeführt. Die logische Gesamtformel für die Transitionsrelation des endlichen Automaten ergibt sich aus der disjunktiven Verknüpfung über alle logische Formeln für die einzelnen FSM-Transitionen.

Somit liegt das SPS-Programm SProg in dem Rechner R in einer Darstellung des endlichen Automaten vor.

Anschließend wird die logische Formel zur Beschreibung des endlichen Automaten in eine BDD-Darstellung überführt 702 (vgl. Figur 7).

Dies erfolgt beispielsweise nach dem in dem Dokument [2] beschriebenen Verfahren.

Die zu verifizierende Eigenschaft des nun in der BDD-Darstellung vorliegenden SPS-Programms wird in einem letzten Schritt 703 unter Verwendung der sog. symbolischen Modellüberprüfung (Symbolic Model Checking) überprüft.

Dies erfolgt beispielsweise nach dem in dem Dokument [3] beschriebenen Verfahren.

### Drittes Ausführungsbeispiel

Eine weitere Möglichkeit, ein SPS-Programm SProg darzustellen, ist in der Verwendung von Anweisungslisten (AWL) zu sehen. Das Verfahren kann ohne weiteres auch für ein SPS-Programm SProg, welches in Form einer Anweisungsliste AWL vorliegt, durchgeführt werden. Üblicherweise besteht ein AWL-Programm aus einem Organisationsbaustein OB und einem Programmbaustein PB. Der Programmbaustein PB wird zyklisch von dem Organisationsbaustein OB gestartet.

Es haben sich verschiedene Möglichkeiten herausgestellt, SPS-Programme SProg die in Form von Anweisungslisten vorliegen, zu verifizieren.

Beispielsweise hat es sich in einer Weiterbildung des Verfahrens als vorteilhaft herausgestellt, die Anweisungsliste auf eine Beschreibung in der Sprache VHDL abzubilden.

Die Verifikation wird dann bei dieser Weiterbildung des Verfahrens unter Verwendung der bekannten Verfahren zur Verifikation von Programmen, die in VHDL beschrieben sind, durchgeführt. Diese Verfahren sind beispielsweise in den Dokumenten [4], [5] und [6] beschrieben.

Der Programmbaustein PB wird bei dieser Variante als ein VHDL-Prozeß modelliert, der auf ein von dem Organisationsbaustein OB zyklisch erzeugtes Startsignal sensitiv ist.

Der VHDL-Prozeß erhält damit Eingabewerte, die zur steigenden Flanke des Startsignals aktuell sind. Ausgabewerte werden dann jeweils nach einem Durchlauf des VHDL-Prozesses auf Ausgangsports geschrieben.

Dieses Verhalten entspricht genau dem eines SPS-Programms SProg in Form von Anweisungslisten. Im Anlauf und im Anfang des zyklischen SPS-Programms werden die Signalzustände von Eingabebaugruppen zum Prozeßabbild der Eingänge übertragen. Am Ende jedes SPS-Programmzyklus werden die Signalzustände von dem Prozeßabbild der Ausgänge zu den jeweiligen Ausgabebaugruppen transferiert.

Somit werden Eingänge des SPS-Programms SProg zu Inputports des VHDL-Programms, Ausgänge des SPS-Programms werden zu Outputports des VHDL-Programms. Ausgänge, deren Wert auch wieder gelesen wird, werden zu sog. Bufferports. Merker können als interne Signale deklariert werden. Sollen die Merker von außen beobachtbar sein, sind sie als sog. Bufferports zu deklarieren.

Folgende Tabelle gibt eine Übersicht der Abbildung der einzelnen Elemente des SPS-Programms in AWL-Darstellung und dem entsprechenden Element in der VHDL-Beschreibungssprache:

| Steuerung | Hardware |
|---|---|
| Start des OB | pos. Taktflanke |
| Eingang | Eingang |
| Ausgang | (Flip-Flop-)Ausgang |
| Merker | Latch |
| Datenbit | Latch |
| Timer | Peripheres Register |
| Zähler | Peripheres Register |

Die Umsetzung nach VHDL erfolgt z. B. nach dem Schema, das in der folgenden Tabelle dargestellt ist:

| AWL | VHDL |
|---|---|
| OB | Process, sensitiv auf Signal ''clk'' |
| Programm-, Funktionsbaustein | Procedure |
| Datenbaustein | variable DB array (0 to maxAdr) of Word; |
| Eingang | In-Port |
| Ausgang | Buffer-Port |
| Merker | Variable |
| Akkumulator 1 | Word Variable |
| Akkumulator 2 | |
| Verknüpfungsergebnis VKE | Bit Variable |
| S, R | if (VKE = '1') then ... else ... |
| Timer | In-Port |
| Zähler | In-Port |
| Sprung | Loop ..., case PC ... |

Sprungbefehle sind lokal innerhalb eines Netzwerks. Im Rahmen einer Kontrollflußanalyse (CFA) werden zunächst die Basisblöcke des Netzwerks bestimmt und diesen jeweils ein eindeutiger Wert des Programmzählers zugeordnet. Ein Sprungbefehl wird auf beispielsweise folgende loop- und case-statements abgebildet:

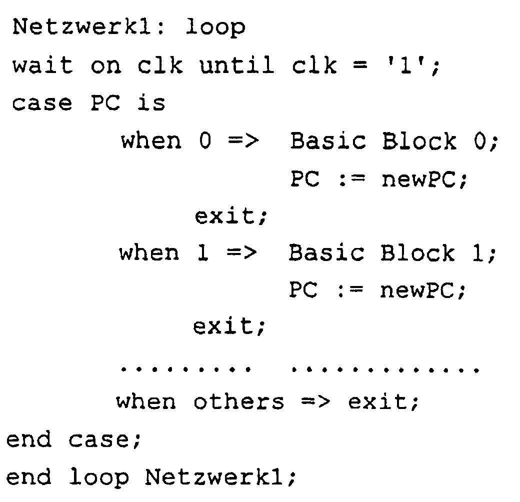

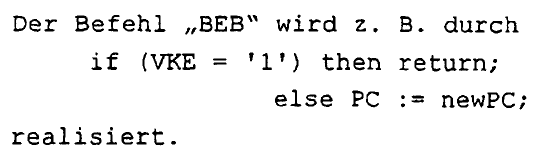

Vorwärtssprünge sind unproblematisch und können auch durch geschachtelte "if...then...else"-Ausdrücke implementiert werden.

Zur Gewährleistung, daß auch bei Rückwärtssprüngen die Existenz eines Schleifenfixpunktes gegeben ist, ist es vorteilhaft, daß zusätzlich alternativ eine der folgenden Maßnahmen ergriffen wird:
- Die Datenworte werden als FSM-Variable modelliert.
- An jedem Schleifenbeginn wird folgender Ausdruck zusätzlich eingefügt:
   wait on clk until clk = "1".

Komplexe Funktionsbausteine, aber auch Timer und Zähler, können als Black Boxes modelliert und dann ihre Funktion durch formal beschriebene Annahmen abstrahiert werden. Die Eingänge des komplexen Funktionsbausteins (Timers, Zählers, ...) werden dabei zu Ausgängen des SPS-Programms, die Ausgänge dieses Bausteins werden dabei zu Eingängen des SPS-Programms.

Häufig wird die zu überprüfende Eigenschaft des SPS-Programms von der genauen Funktion des Bausteins (Timers, Zählers, ...) unabhängig sein. Die symbolische Modellüberprüfung überprüft dann die zu verifizierende Eigenschaft unter allen möglichen Wertebelegungen dieser Baustein- (Timer-, Zähler-, ...) Ausgänge.

Da die Eingänge -beispielsweise eines Timers- zu Ausgängen des SPS-Programms SProg werden, kann der Wert dieser Eingänge unter Verwendung der symbolischen Modellüberprüfung überprüft werden.

Falls die zu überprüfende Eigenschaft jedoch von der Funktion des Bausteins (Timers, Zählers, ...) abhängt, kann das Verhalten des Bausteins durch entsprechende Annahmen in abstrahierender Weise beschrieben werden.

Gegebenenfalls können komplexe Funktionsbausteine (Timer, Zähler, ...) aber auch als eigene VHDL-Prozesse oder VHDL-Komponenten modelliert werden, die das Verhalten detailliert beschreiben.

Timer und Zähler werden dabei i.d.R. vordefiniert und in eine Bausteinbibliothek eingebracht werden. Sie sind dann bei der Umsetzung in den Automaten lediglich zu instanziieren. Komplexe Funktionsbausteine können wie reguläre SPS-Programme automatisch übersetzt werden.

Ein Timer kann beispielsweise auf folgende Weise als VHDL-Komponente modelliert werden:
library IEEE,DWARE,DW03;
use IEEE.std_logic_1164.all;
use DW03.DW03_components.all; 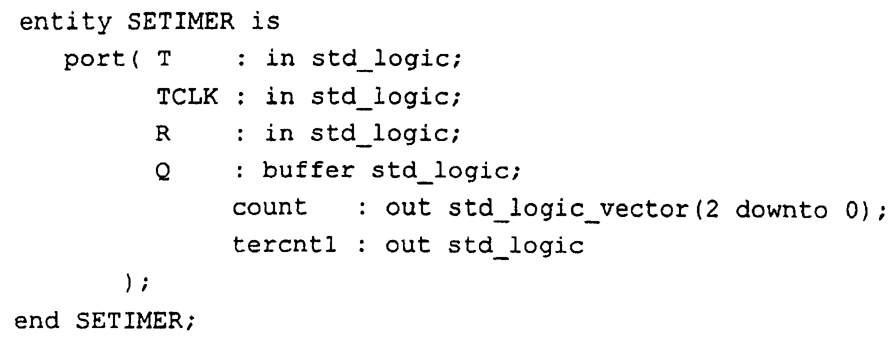 architecture fup of SETIMER is

| | |
|---|---|
| constant width | positive := 3; |
| constant count_to | positive := 5; |
| constant up | std_logic := '1'; -- upward |
| constant zero | std_logic_vector(2 downto 0) := "000"; |

| | |
|---|---|
| signal up_dn | std_logic := up; |
| signal tercnt | std_logic; |
| signal reset | std_logic:= '1'; |
| signal load | std_logic := '0'; |
| signal RN | std_logic; |

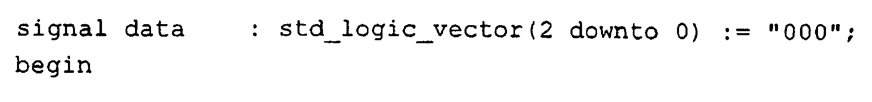

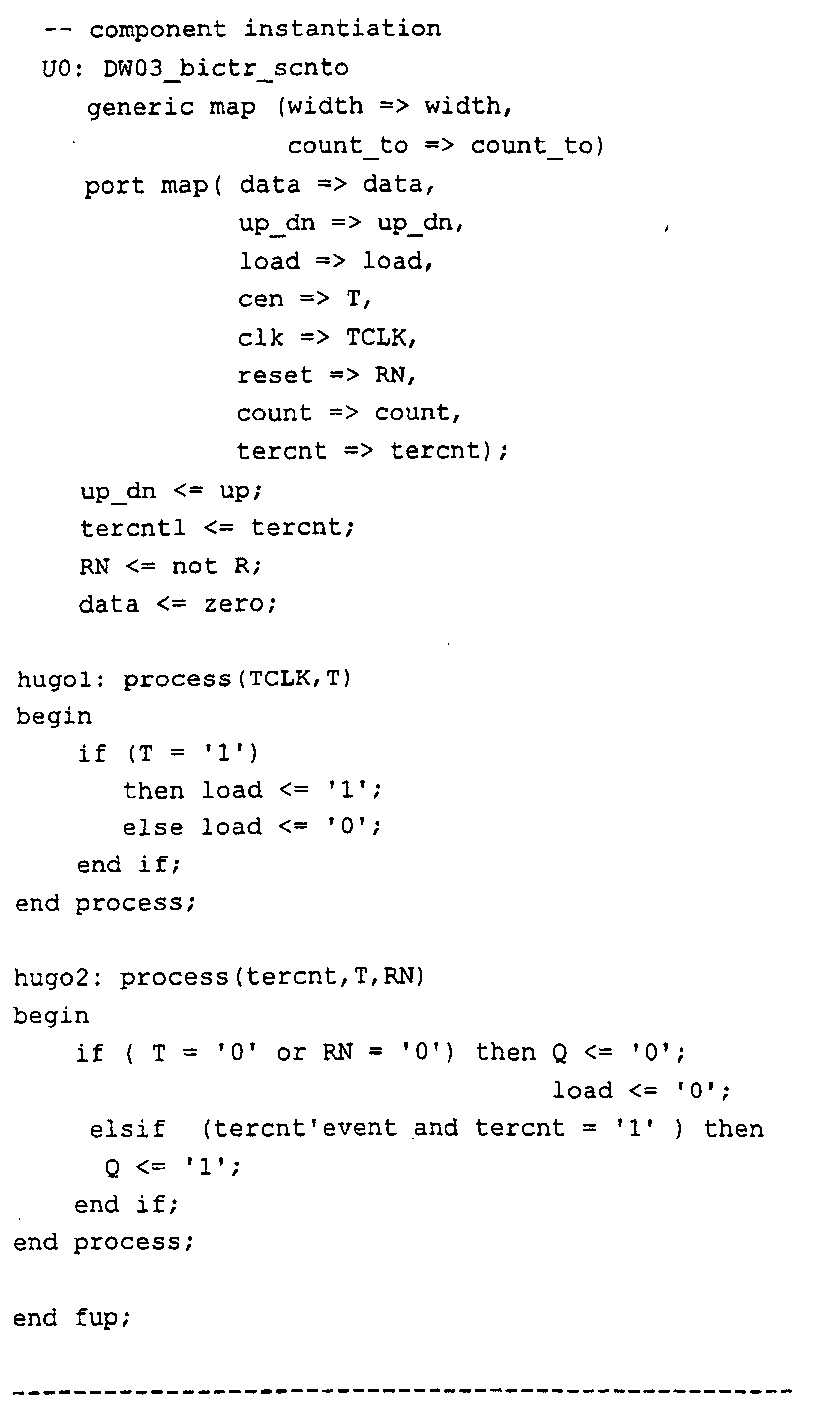

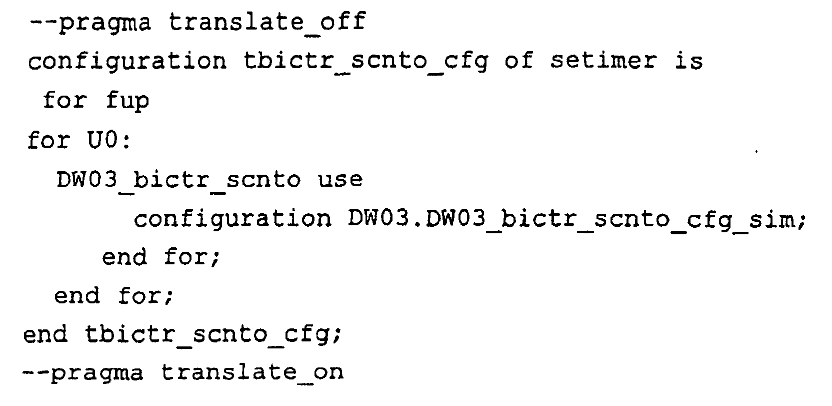

Zusammenfassend ergeben sich folgende Verfahrensschritte des Verfahrens zur Verifikation eines SPS-Programms, die in Fig. 7 dargestellt sind.

Mindestens eine zu verfizierende Eigenschaft VE des SPS-Programms SProg wird in einer formalen Spezifikationssprache formuliert. Das SPS-Programm SProg wird auf einen endlichen Automaten abgebildet 701. Der endliche Automat wird unter Verwendung von BDDs beschrieben 702. Die zu verifizierende Eigenschaft wird unter Verwendung der symbolischen Modellüberprüfung überprüft 703.

Es ist jedoch in einer Weiterbildung des Verfahrens ebenso vorgesehen, auch die Eigenschaften VE auf den endlichen Automaten zusammen mit dem SPS-Programm SProg abzubilden.

Eine regressive Ueberpruefung eines SPS-Programms SProg nach Änderungen ist ein Spezialfall der hier beschriebenen Modellüberprüfung und kann wie folgt durchgeführt werden.

Das ursprüngliche SPS-Programm SProg wird - wie oben beschrieben wurde- durch einen ersten Automaten A modelliert. Das geänderte SPS-Programm SProg' wird ebenfalls in der dargestellten Weise durch einen zweiten Automaten A' modelliert.

Aus diesen beiden Automaten A, A' wird z. B. analog dem in dem Dokument [7] beschriebenen Verfahren ein Produktautomat AProd konstruiert; dabei werden nur diejenigen Ausgänge berücksichtigt, deren Verhalten nicht geändert wurde.

Die beiden SPS-Programme verhalten sich bzgl. der nicht geänderten Ausgänge äquivalent, wenn der Ausgang des Produktautomaten Aprod immer den Wert TRUE liefert. Diese Eigenschaft des Produktautomaten Aprod wird unter Verwendung der symbolischen Modellüberprüfung überprüft.

Auch diese Überprüfung kann ggf. unter Annahmen über das gesteuerte System stattfinden. Weiterhin brauchen ggf. nicht alle Teile des SPS-Programms SProg detailliert modelliert zu sein. Häufig reicht es aus, Teilkomponenten, von denen äquivalentes Verhalten bekannt ist, als Black-Boxes zu betrachten.

Unter dem Ausdruck "Änderung eines SPS-Programms" ist in diesem Zusammenhang u.a. die Neuformulierung (ggf. sogar in einer anderen, besser geeigneten SPS-Sprache, wie z.B. in Zustandsgraphen anstelle in AWL), aber auch lokale Änderungen und Ergänzungen der ursprünglichen Programmquelle zu verstehen.

Im Rahmen dieses Dokumentes wurden folgende Veröffentlichungen zitiert:
[1] C. Hoare, An Axiomatic Basis for Computer Programming, CACM, 12, S. 576 - 580, 1969
[2] R. Bryant, Symbolic Boolean Manipulation with Ordered Binary-Decision Diagrams, ACM Computing Survey, Vol. 24, Nr. 3, S. 293 - 318, Sept. 1992
[3] J. Burch et al, Symbolic Model Checking for Sequential Circuit Verification, IEEE Trans. on Computer-Aided Design of Integrated Circuits and Systems, Vol. 13, Nr. 4, S. 401 - 424, April 1994
[4] T. Filkorn, M. Payer, P. Warkentin, Symbolic Verification of Sequential Circuits Synthesized with CALLAS, 6th Internat. Workshop on High-Level Synthesis, Laguna Nigel, CA, S. 1 - 10, 1992
[5] G. Döhmen et al, Translating VHDL into Functional Symbolic Finite-State Models, Kluwer Academic Publishers, Boston, Formal Methods in System Design, ISSN 0925-9856, S. 125 - 148, 1995
[6] G. Döhmen und R. Herrmann, A Deterministic Finite-State Model vor VHDL, Kluwer Academic Publishers, Formal Semantics for VHDL, C. Kloos und P. Breuer (EDS), ISBN 0-7923-9552-2, S. 1 - 43, 1995
[7] T. Filkorn, A Method for Symbolic Verification of Synchronous Sequential Circuits, CHDL 91 - Computer Hardware Description Languages and their Application, April 1991, Editors D. Borrione and R. Waxman, S. 229--239, Marseille, France, 1991

## Patentansprüche

1. Verfahren zur Verifikation eines Programms (SPS), welches in einer Sprache der Speicher-Programmierbaren-Steuerung vorliegt, durch einen Rechner (R),
- bei dem mindestens eine zu verifizierende Eigenschaft (VE) des Programms (SPS) in einer formalen Spezifikationssprache vorliegt,
- bei dem das Programm (SPS) auf mindestens einen endlichen Automaten abgebildet wird (701),
- bei dem der endliche Automat unter Verwendung von mindestens einem Binary Decision Diagram (BDD) beschrieben wird (702), und
- bei dem die genannte, mindestens eine zu verifizierende Eigenschaft (VE) des als Binary Decision Diagram beschriebenen Programms (SPS) unter Verwendung der Symbolischen Modellüberprüfung (Symbolic Model Checking) überprüft wird (703).

2. Verfahren nach Anspruch 1,
bei dem die genannte, mindestens eine zu verifizierende Eigenschaft (VE) und das Programm (SPS) auf mindestens einen endlichen Automaten abgebildet wird.

3. Verfahren nach Anspruch 1 oder 2,
bei dem als die Sprache der Speicher-Programmierbaren-Steuerung eine Zustandsgraphen-Beschreibungssprache verwendet wird.

4. Verfahren nach einem der Ansprüche 1 bis 3,
bei dem als die Sprache der Speicher-Programmierbaren-Steuerung eine Beschreibungssprache, welche Anweisungslisten enthält, verwendet wird.

5. Verfahren nach einem der Ansprüche 1 bis 4,
bei dem die genannte, mindestens eine zu verifizierende Eigenschaft (VE) und das Programm vor der Abbildung auf den endlichen Automaten auf eine Syntax in VHDL abgebildet wird.

6. Verfahren nach einem der Ansprüche 1 bis 5,
- bei dem mindestens eine Annahme über Rahmenbedingungen des Programms (SPS) in einer formalen Spezifikationssprache vorliegt, und
- bei dem die Annahme gemeinsam mit der genannten, mindestens eine zu verifizierenden Eigenschaft (VE) bei der formalen Verifikation (FM) des Programms (SPS) berücksichtigt wird.

7. Verfahren nach einem der Ansprüche 1 bis 6,
bei dem für den Fall, daß das Programm (SPS) die genannte, mindestens eine zu verifizierende Eigenschaft (VE) nicht aufweist, eine Widerlegungssequenz (WS) ermittelt wird, gespeichert wird und einem Benutzer bei Bedarf angezeigt wird, in der diejenige Testsequenz mit den Testgrößen beschrieben wird, die zu dem Ergebnis führte, daß das Programm die genannte, mindestens eine zu verifizierende Eigenschaft (VE) nicht aufweist.

8. Verwendung des Verfahrens nach einem der Ansprüche 1 bis 7 zur regressiven Überprüfung des SPS-Programms (SProg) nach Änderungen des SPS-Programms (SProg)

## Claims

1. Method for verifying a program (SPS) which is in a programmable logic controller language using a computer (R),
- in which at least one property (VE) to be verified for the program (SPS) is in a formal specification language,
- in which the program (SPS) is mapped (701) onto at least one finite machine,
- in which the finite machine is described (702) using at least one binary decision diagram (BDD), and
- in which the said, at least one property (VE) to be verified for the program (SPS) described in the form of a binary decision diagram is checked (703) using symbolic model checking.

2. Method according to Claim 1,
in which the said, at least one property (VE) to be verified and the program (SPS) are mapped onto at least one finite machine.

3. Method according to Claim 1 or 2,
in which the programmable logic controller language used is a state diagram description language.

4. Method according to one of Claims 1 to 3,
in which the programmable logic controller language used is a description language which contains instruction lists.

5. Method according to one of Claims 1 to 4,
in which the said, at least one property (VE) to be verified and the program are mapped onto a syntax in VHDL before the mapping onto the finite machine.

6. Method according to one of Claims 1 to 5,
- in which at least one assumption about boundary conditions of the program (SPS) is in a formal specification language, and
- in which the assumption is taken into account in the formal verification (FM) of the program (SPS) together with the said, at least one property (VE) to be verified.

7. Method according to one of Claims 1 to 6,
- in which, if the program (SPS) does not have the said, at least one property (VE) to be verified, a refutation sequence (WS) is ascertained, is stored and is displayed to a user if required, the said refutation sequence describing that test sequence with the test variables which resulted in the program not having the said, at least one property (VE) to be verified.

8. Use of the method according to one of Claims 1 to 7 for regressively checking the SPS program (SProg) after changes to the SPS program (SProg).

## Revendications

1. Procédé de vérification par un ordinateur (R) d'un programme (SPS) écrit dans un langage de l'automate programmable,
- dans lequel au moins une propriété à vérifier (VE) du programme (SPS) est écrite dans un langage de spécification formelle,
- dans lequel le programme (SPS) est reproduit sur au moins un automate fini (701),
- dans lequel l'automate fini est décrit par au moins un Binary Decision Diagram (BDD) (702) et
- dans lequel ladite au moins une propriété à vérifier (VE) du programme (SPS) décrit comme Binary Decision Diagram est vérifiée par la vérification symbolique de modèles (Symbolic Model Checking) (703).

2. Procédé selon la revendication 1, dans lequel ladite au moins une propriété à vérifier (VE) et le programme (SPS) sont reproduits sur au moins un automate fini.

3. Procédé selon la revendication 1 ou 2, dans lequel on utilise comme langage de l'automate programmable un langage de description des graphes d'états.

4. Procédé selon l'une des revendications 1 à 3, dans lequel on utilise comme langage de l'automate programmable un langage de description contenant des listes d'instructions.

5. Procédé selon l'une des revendications 1 à 4, dans lequel ladite au moins une propriété à vérifier (VE) et le programme, avant la reproduction sur l'automate fini, sont reproduits sur une syntaxe en VHDL.

6. Procédé selon l'une des revendications 1 à 5,
- dans lequel au moins une hypothèse sur des conditions de base du programme (SPS) est écrite dans un langage de spécification formelle et
- dans lequel l'hypothèse, ensemble avec ladite au moins une propriété à vérifier (VE), est prise en compte lors de la vérification formelle (FM) du programme (SPS).

7. Procédé selon l'une des revendications 1 à 6, dans lequel, pour le cas où le programme (SPS) ne présenterait pas ladite au moins une propriété à vérifier (VE), une séquence de réfutation (WS) est déterminée, mémorisée et, si besoin, indiquée à un utilisateur, dans laquelle est décrite la séquence d'essais avec les données d'essais, qui a conduit au résultat que le programme ne présente pas ladite au moins une propriété à vérifier (VE).

8. Utilisation du procédé selon l'une des revendications 1 à 7 pour la vérification régressive du programme SPS (SProg) en vue d'identifier des modifications dudit programme SPS (SProg).
